# EUROPÄISCHE PATENTSCHRIFT

(11) **EP 0 438 089 B1**
(45) Veröffentlichungstag und Bekanntmachung des Hinweises auf die Patenterteilung: **12.04.1995**
(21) Anmeldenummer: 91100337.4
(22) Anmeldetag: 12.01.1991
(51) Int. Cl.: B60R 13/04, B60R 13/00

(54) **Haltevorrichtung für eine Kfz-Kühlerfigur**
Mounting device for a radiator emblem
Dispositif de fixation d'un insigne de radiateur

(30) Priorität: 23.06.1990 DE 9007030 U; 16.01.1990 DE 9000379 U
(43) Veröffentlichungstag der Anmeldung: 24.07.1991
(73) Patentinhaber: FRIEDR. FINGSCHEIDT GmbH, D-42551 Velbert (DE)
(72) Erfinder: Zimmermann, Waldemar, W-5620 Velbert 1 (DE)
(74) Vertreter: Zapf, Christoph, Dipl.-Ing.

(56) Entgegenhaltungen:
- DE-A- 2 522 121
- DE-A- 2 605 297
- DE-A- 3 214 613
- DE-A- 3 636 582

## Beschreibung

Die vorliegende Erfindung betrifft eine Haltevorrichtung mit einer Kühlerfigur zur Montage in einer Montageöffnung eines Karosserieblechteils, bestehend aus einem die Kühlerfigur insbesondere über eine Schwenklagerung sowie federelastisch über eine Figuren-Haltefeder halternden, in Richtung seiner Längsachse in die Montageöffnung einsetzbaren Sockelteil mit einem umfänglichen Auflagesteg zur Auflage auf der Oberseite des Montageöffnungsrandes sowie aus einem mit dem Sockelteil verbundenen Arretierteil, das in montiertem Zustand zur Halterung des Sockelteils in der Montageöffnung unter Vorspannung an der Unterseite des Montageöffnungsrandes anliegt, wobei das Arretierteil unmittelbar, unabhängig von der Figuren-Haltefeder mit dem Sockelteil verbunden ist und wobei die Figuren-Haltefeder als Schrauben-Druckfeder ausgebildet ist, deren oberes, dem Auflagesteg zugekehrtes Ende an dem Sockelteil abgestützt ist, und deren gegenüberliegendes, unteres Ende mit dem Figuren-Fuß verbunden ist.

Bei sogenannten Kühlerfiguren, die insbesondere im Frontbereich mancher Kraftfahrzeuge angeordnet sind, besteht aus Gründen der Sicherheit die Anforderung, daß die Figur, die ja von der Karosserie absteht, beliebig verschwenkbar gelagert sein muß, um bei eventuellen Kollisionen mit Personen Verletzungen möglichst zu vermeiden. Andererseits soll die Figur über die Haltevorrichtung auch möglichst diebstahlsicher gehaltert sein.

Eine gattungsgemäße, aus der DE-A-3 636 582 bekannte Haltevorrichtung weist eine als Druckfeder ausgebildete und sich mit ihrem oberen Ende am Sockelteil (Basisteil) abstützende Figuren-Haltefeder auf, deren unteres Ende mit dem Fußteil der Kühlerfigur verbunden ist. Hierzu ist allerdings mit dem Fußteil ein Seil verlötet, welches unterhalb der Fahrzeugkarosserie mit einem Gegenlager über eine Schraubverbindung verbunden ist. Die Druckfeder stützt sich dabei mit ihrem unteren Ende an dem Gegenlager ab und hält so über das Seil die Kühlerfigur unter Vorspannung. Diese bekannte Konstruktion ist nun aus mehreren Gründen nachteilig. So ist die Herstellung, d.h. die Montage der Einzelteile, schwierig und zeitaufwendig, denn es muß zunächst das Seil mit dem Fußteil verbunden (verlötet) werden, und dann muß über die Schraubverbindung das Seil mit dem Gegenlager verbunden werden, wobei aber gleichzeitig die Druckfeder montiert sowie unter Vorspannung gehalten werden muß. Dies erfordert viel handwerkliches Geschick, zumal ja auch über das Gegenlager die Vorspannung der Druckfeder "eingestellt" werden muß, und zwar durch Einstellung der zwischen Fußteil und Gegenlager "wirksamen" Länge des Seils. Daher werden in der Praxis von Haltevorrichtung zu Haltevorrichtung unterschiedliche Haltekräfte auftreten, so daß sich die produzierten Haltevorrichtungen auch hinsichtlich des Kippverhaltens der Kühlerfigur voneinander unterscheiden. Das Kippverhalten ist jedoch von großer Bedeutung, denn zu hohe Kippkräfte sind stets zu vermeiden, damit es bei einem Unfall mit einem Fußgänger nicht zu gravierenden Verletzungen durch die Kühlerfigur kommt. Vielmehr muß stets gewährleistet sein, daß die Kühlerfigur in derartigen Fällen leicht umklappt. Andererseits darf die Kippkraft aber auch nicht zu niedrig sein, damit die Kühlerfigur nicht - z.B. durch den Fahrtwind (Luftwiderstand) - ungewollt umklappt.

Eine weitere, ebenfalls gattungsgemäße Haltevorrichtung ist in der DE-A-3 214 613 beschrieben. Hierbei ist das untere Ende einer Schraubenfeder mit dem Fußabschnitt der Kühlerfigur über einen Splint verbunden. Daher ist die Montage ebenfalls schwierig, weil vor bzw. beim Umbiegen der Splintenden die Feder vorgespannt werden muß, und auch hier ist die Vorspannung und somit auch die Figuren-Haltekraft abhängig von der Montagegenauigkeit, weil durch unterschiedliches Umbiegen des Splintes auch seine Länge und damit die Federvorspannung variiert.

Aus der DE-A-25 22 121, Figuren 6 bis 8, ist eine weitere Haltevorrichtung bekannt, wobei die Figur, bei der es sich um einen von einem Kreisring umschlossenen, dreistrahligen Stern handelt, über eine spezielle Lagerung aus einer durch Rasten definierten Grund- bzw. Vorzugsstellung heraus in beliebigen Richtungen verschwenkbar ist, und zusätzlich kann die Figur auch zusammen mit der Schwenklagerung gegen eine das Lager beaufschlagende Federkraft in die Haltevorrichtung bzw. das Sockelteil eingedrückt werden. Hinsichtlich dieser Sicherheitsfunktionen hat sich die bekannte Haltevorrichtung im wesentlichen gut bewährt. Demgegenüber ist jedoch die Befestigung des Sockelteils in der Montageöffnung des Karosserieblechteils mittels des Arretierteils noch verbesserungsbedürftig. Dies hat vor allem folgende Ursachen. Das Arretierteil der bekannten Haltevorrichtung ist etwa U-förmig mit zwei axial neben dem Sockelteil verlaufenden, einander diametral gegenüberliegenden Längsstegen und einem diese Längsstege verbindenden,quer über das der Kühlerfigur abgekehrte, untere Ende des Sockelteils verlaufenden Quersteg ausgebildet. Die Längsstege sind dabei mit ihren Innenflächen auf dem Außenumfang des Sockelteils derart geführt, daß das Arretierteil um die Längsachse verdrehbar angeordnet ist. Zur unverlierbaren Halterung des Arretierteils ist dieses im Bereich seines Quersteges über die als Schraubenfeder ausgebildete Figuren-Haltefeder durch das Sockelteil sowie eine Öffnung des Schwenklagers hindurch mit einem Fuß der Kühlerfigur verbunden. Diese Ausgestaltung führt einerseits zu dem Nachteil einer großen axialen Einbautiefe (bis zu 6 cm, gemessen von dem Auflagesteg nach unten), für die aber in Automobilen neuerer Bauart oftmals nicht mehr der erforderliche Einbauraum zur Verfügung steht. Andererseits führt die beschriebene Ausgestaltung auch dazu, daß die Figuren-Haltefeder zwei Funktionen in sich vereint, nämlich einerseits die Figur unter Vorspannung mit ihrem Fuß in dem Schwenklager zu halten, und andererseits auch zur Erzeugung der Vorspannung des Arretierteils, um das Sockelteil in der Montageöffnung des Karosserieteils zu haltern. Wird nun - zum Beispiel zum Zwecke des Diebstahls der Kühlerfigur - die Haltefeder im Bereich des Figuren-Fußes, der durch Umklappen der Figur von außen zugänglich ist, durchgeschnitten, so würde hierdurch nachteiligerweise auch das Arretierteil von dem Sockelteil gelöst, so daß das gesamte Sockelteil nicht mehr fixiert wäre und somit ebenfalls entnommen werden könnte. Schließlich besteht noch ein weiterer Nachteil darin, daß das Sockelteil der bekannten Haltevorrichtung auch nicht bzw. nur sehr schwierig ohne die beschriebene Zerstörung der Haltefeder demontierbar ist. Dies liegt daran, daß die Längsstege des Arretierteils in der Vormontagestellung mit ihren Enden bzw. mit hier angeordneten Stützfüßen auf sich axial erstreckenden Distanzhaltern aufliegen, wodurch die Figuren-Haltefeder gelängt und deren Vorspannung erhöht ist. Aus dieser Vormontagestellung heraus wird das Arretierteil nach dem Einsetzen des Sockelteils in die Montageöffnung um 90° um die Längsachse relativ zu dem Sockelteil verdreht, wodurch die Stützfüße der Längsstege von den Distanzhaltern herunterspringen und so zur Auflage auf der Unterseite des Montageöffnungsrandes gelangen. Für ein nachfolgendes Demontieren der bekannten Haltevorrichtung wäre es erforderlich, das Arretierteil aus der Arretierstellung heraus wieder zurück um 90° in die Vormontagestellung zu verdrehen, wozu es aber gleichzeitig gegen die Federvorspannung der Haltefeder von dem Karosserieteil nach unten gezogen werden müßte, um die Stützfüße wieder auf die Distanzhalter zu bringen, was jedoch aufgrund der Höhe der Federvorspannung manuell nicht oder nur mit größter Kraftanstrengung und auch nur mit einem geeigneten Werkzeug möglich ist. Eine Demontagemöglichkeit der Haltevorrichtung durch den Fahrzeughalter bzw. eine hierzu autorisierte Person wäre aber durchaus erwünscht, da eine derartige autorisierte Demontage einen Diebstahl der Haltevorrichtung einschließlich der Kühlerfigur wirkungsvoll verhindern würde.

Der vorliegenden Erfindung liegt nun die Aufgabe zugrunde, die eingangs beschriebene, gattungsgemäße Haltevorrichtung so zu verbessern, daß bei kompakter und konstruktiv einfacher Ausgestaltung sowie unter Gewährleistung der Möglichkeit für einfache und beliebig wiederholbare Montage und Demontage der gesamte Haltevorrichtung auch deren Herstellung (Montage der Einzelteile) bei hoher Genauigkleit der die Kühlerfigur beaufschlagenden Haltekraft einfach und preiswert ist.

Erfindungsgemäß wird dies dadurch erreicht, daß das untere Ende der Figuren-Haltefeder über einen sich einstückig anschließenden, umgebogenen, sich axial durch die Haltefeder hindurch nach oben erstreckenden Federdrahtabschnitt mit dem Figuren-Fuß verbunden ist.

Aufgrund dieser vorteilhaften Ausgestaltung ist die Montage außerordentlich einfach und schnell durchführbar, denn die Feder braucht lediglich mit ihrem oberen Ende gegen den Sockel geführt zu werden, wobei dann das freie, obere Ende des erfindungsgemäßen, mit der Feder einstückigen Federdrahtabschnittes nur noch mit dem Figurenfuß verbunden zu werden braucht. Vorzugsweise ist hierzu am Ende des Federdrahtabschnittes ein Haken gebildet, der einfach in eine Queröffnung des Figurenfußes eingehängt zu werden braucht. Weitere Montagearbeiten im Bereich der Haltefeder sind dann nicht mehr erforderlich, da ja das untere Federende bereits einstückig mit dem axialen Abschnitt verbunden ist. Hierdurch ist auch die "wirksame", d.h. die Vorspannung der Haltefeder bestimmende Länge des axialen Abschnittes sehr genau definiert, so daß auch bei allen produzierten Haltevorrichtungen sehr genau dieselbe Haltekraft erreicht wird, und zwar vorteilhafterweise ohne aufwendige Einstellarbeiten.

Dabei ist gemäß der Erfindung weiterhin vorgesehen, daß aufgrund einer "Entkopplung" des Arretierteils von der Haltefeder letztere nur eine einzige Funktion, nämlich ihre eigentliche Funktion der Halterung der Kühlerfigur besitzt, so daß bei einem eventuellen Diebstahl der Kühlerfigur die übrige Haltevorrichtung bzw. das Sockelteil zusammen mit dem Arretierteil in der Montageöffnung verbleibt. Dies ist auch insofern von Bedeutung, als jederzeit der Diebstahl beispielsweise bei Versicherungen nachweisbar ist. Die Arretierung der gesamten Vorrichtung ist von der Haltefeder absolut unabhängig.

Weiterhin ist es vorteilhaft, wenn das obere Ende der Figuren-Haltefeder mittelbar über das in dem Sockelteil gelagerte Schwenklager an dem Sockelteil abgestützt ist. Durch diese Ausgestaltung ist das untere, der Kühlerfigur abgekehrte Ende der Figuren-Haltefeder "frei", d.h. die Haltefeder ist hier nicht an einem "Widerlager" abgestützt. Durch diese Anordnung der Figuren-Haltefeder wird eine sehr geringe Einbautiefe der Haltevorrichtung erreicht, die beispielsweise um etwa ein Drittel gegenüber der aus der DE-A-25 22 121 bekannten Haltevorrichtung reduziert ist.

Das Arretierteil ist vorzugsweise mit dem Sockelteil vormontiert, wobei es zudem von Vorteil ist, wenn das Arretierteil um die Längsachse des Sockelteils aus einer Vormontagestellung um insbesondere etwa 90° in eine Arretierstellung verdrehbar mit dem Sockelteil verbunden ist, wobei in der Vormontagestellung das Sockelteil zusammen mit dem Arretierteil in die Montageöffnung einsetzbar ist und in der Arretierstellung das Arretierteil unter Vorspannung an der Unterseite des Montageöffnungsrandes anliegt. Hierbei ist es von besonderem Vorteil, wenn das Arretierteil über eine schnappbare Formschlußverbindung an dem Sockelteil gehaltert ist. Dies bedeutet, daß auch hierdurch erfindungsgemäß die unverlierbare Halterung des Arretierteils an dem Sockelteil unabhängig von der Figuren-Haltefeder ist. Hierdurch kann das Arretierteil vorteilhafterweise so ausgebildet werden, daß seine Vorspannung bei einem Verdrehen aus der Arretierstellung zurück in die Vormontagestellung nicht mehr - wie beim eingangs beschriebenen Stand der Technik gemäß DE-A-25 22 121 - zunimmt, sondern vielmehr vorteilhafterweise sogar abnimmt. In einer besonders vorteilhaften Ausführungsform der Erfindung wird dies dadurch erreicht, daß das Arretierteil in der Arretierstellung mit dem Sockelteil - zusätzlich zu der schnappbaren Formschlußverbindung - über ein die Vorspannung erzeugendes Schnellverschlußgewinde verbunden ist. Bei einem Zurückdrehen des Arretierteils in die Vormontagestellung werden die Teile des Schnellverschlußgewindes voneinander gelöst, so daß auch die Vorspannung abnimmt. Es ist somit sehr leicht manuell möglich, das Arretierteil beliebig zwischen der Vormontagestellung und der Arretierstellung hin und her zu verdrehen, so daß die Vormontagestellung durch die Erfindung ohne weiteres auch als "Lösestellung" bezeichnet werden kann. Nähere Einzelheiten zu dem erfindungsgemäßen Schnellverschlußgewinde werden in der nachfolgenden Beschreibung eines bevorzugten Ausführungsbeispiels noch erläutert werden.

Alternativ zu der erfindungsgemäßen Ausführung, das Arretierteil mit dem Sockelteil vorzumontieren, kann das Arretierteil mit Vorteil auch als von unten lösbar auf das Sockelteil aufsetzbares Verschlußteil, z.B. als Verschlußkappe, ausgebildet sein. Für die Ausgestaltung dieses Verschlußteils und die Art der Verbindung mit dem Sockelteil werden im folgenden noch mehrere Ausführungsbeispiele beschrieben werden. Weiterhin is es alternativ möglich, das Arretierteil als schwenkbeweglich an dem Sockelteil gehaltertes Federelement, z.B. als Federbügel, auszubilden.

Weitere vorteilhafte Ausgestaltungsmerkmale der Erfindung sind in den Unteransprüchen sowie der folgenden Beschreibung enthalten.

Anhand mehrerer in der Zeichnung dargestellter Ausführungsbeispiele wird im folgenden die Erfindung näher erläutert. Dabei zeigen:
- Fig. 1: eine Teil-Axialschnittdarstellung einer ersten Ausführungsform einer erfindungsgemäßen Haltevorrichtung im montierten Zustand,
- Fig. 2: eine Ansicht auf die Kühlerfigur in Pfeilrichtung II gemäß Fig. 1,
- Fig. 3 bis 6: Einzelteile der erfindungsgemäßen Haltevorrichtung jeweils im Axialschnitt durch die Schnittebene X-X in Fig. 1,
- Fig. 7: eine gegenüber Fig. 2 vergrößerte Ansicht des Figuren-Fußes in Pfeilrichtung VII gemäß Fig. 2,
- Fig. 8 bis 10: die in den Fig. 3 bis 5 dargestellten Einzelteile jeweils im Axialschnitt durch die Schnittebene Y-Y,
- Fig. 11: eine Draufsicht des Sockelteils in Pfeilrichtung XI gemäß Fig. 9,
- Fig. 12: eine Draufsicht des Lagers in Pfeilrichtung XII gemäß Fig. 10,
- Fig. 13: eine Seitenansicht einer erfindungsgemäßen Figuren-Haltefeder,
- Fig. 14: eine Seitenansicht der erfindungsgemäßen Haltevorrichtung in Pfeilrichtung XIV gemäß Fig. 1 in der Arretierstellung eines als Federbügel ausgebildeten Arretierteils,
- Fig. 15: den Federbügel nach Fig. 14 in einer zum Lösen verschwenkten Stellung,
- Fig. 16: eine Ansicht des von der Haltevorrichtung entfernten Federbügels in Pfeilrichtung XVI gemäß Fig. 15,
- Fig. 17: eine zweite Ausführungsform der erfindungsgemäßen Haltevorrichtung im Teil-Axialschnitt mit gegenüber der Ausführung nach Fig. 1 bis 16 unterschiedlichem Sockelteil und unterschiedlichem Arretierteil,
- Fig. 18: einen Axialschnitt des Sockelteils nach Fig. 17,
- Fig. 19: einen Querschnitt längs der Linie A-A in Fig. 18,
- Fig. 20: einen Querschnitt längs der Linie B-B in Fig. 18,
- Fig. 21: eine verkleinerte Seitenansicht des Sockelteils nach Fig. 17,
- Fig. 22: einen Axialschnitt des als Verschlußkappe ausgebildeten Arretierteils der Ausführung nach Fig. 17,
- Fig. 23: eine dritte Ausführungsform der erfindungsgemäßen Haltevorrichtung in einer zu Fig. 1 und 17 analogen Darstellung, wiederum mit unterschiedlichem Sockelteil und Arretierteil,
- Fig. 24: eine Seitenansicht des Sockelteils der Ausführung nach Fig. 23,
- Fig. 25: eine Ansicht des Sockelteils von unten, d.h. in Pfeilrichtung XXV gemäß Fig. 24,
- Fig. 26: einen Axialschnitt längs der Linie A-A in Fig. 25,
- Fig. 27: einen Querschnitt längs der Linie B-B in Fig. 26,
- Fig. 28: einen Querschnitt längs der Linie C-C in Fig. 26,
- Fig. 29: einen Axialschnitt längs der Linie D-D in Fig. 28 einer Einzelheit des Sockelteils in einer vergrößerten Darstellung,
- Fig. 30: eine Seitenansicht des als Verschlußkappe ausgebildeten Arretierteils der Ausführungsform nach Fig. 23,
- Fig. 31: eine Ansicht des Arretierteils von unten, d.h. in Pfeilrichtung XXXI gemäß Fig. 30,
- Fig. 32: eine Ansicht des Arretierteils von oben, d.h. in Pfeilrichtung XXXII gemäß Fig. 30,
- Fig. 33: einen Axialschnitt des Arretierteils längs der Linie A-A in Fig. 31,
- Fig. 34: eine vierte Ausführungsform der erfindungsgemäßen Haltevorrichtung in einer zu Fig. 1, 17 und 23 analogen Darstellung,
- Fig. 35: eine Axialschnittdarstellung einer weiteren Ausführungsform einer erfindungsgemäßen Haltevorrichtung im montierten, jedoch nicht arretierten Zustand, d.h. in Lösestellung des Arretierteils,
- Fig. 36: eine Ansicht auf die Kühlerfigur in Pfeilrichtung II gemäß Fig. 35,
- Fig. 37: eine gegenüber Fig. 36 vergrößerte Ansicht des Figuren-Fußes in Pfeilrichtung III gemäß Fig. 36,
- Fig. 38 bis 41: Einzelteile der erfindungsgemäßen Haltevorrichtung jeweils im Axialschnitt durch die gleiche Schnittebene wie in Fig. 35,
- Fig. 42 und 43: die in den Fig. 38 und 40 dargestellten Einzelteile jeweils im Axialschnitt durch die Schnittebene Y-Y,
- Fig. 44: eine Draufsicht des Lagers in Pfeilrichtung X gemäß Fig. 40,
- Fig. 45: eine gegenüber Fig. 35 vergrößerte Seitenansicht einer erfindungsgemäßen Figuren-Haltefeder,
- Fig. 46: eine Seitenansicht des Sockelteils,
- Fig. 47: eine Ansicht des Sockelteils in Pfeilrichtung XIII gemäß Fig. 46,
- Fig. 48: einen Axialschnitt des Sockelteils wie in Fig. 35 und 39 bzw. längs der Linie A-A in Fig. 47,
- Fig. 49: eine Seitenansicht eines erfindungsgemäßen Arretierteils in hinsichtlich der Arretierstellung lagerichtiger Zuordnung bzw. Drehstellung zu dem Sockelteil in Fig. 46,
- Fig. 50: einen Schnitt des Arretierteils wie in Fig. 35 bzw. längs der Linie D-D in Fig. 49, d.h. in hinsichtlich der Lösestellung lagerichtiger Zuordnung bzw. Drehstellung zu dem Sockelteil in Fig. 48,
- Fig. 51: einen Querschnitt durch das Sockelteil längs der Linie B-B in Fig. 48,
- Fig. 52: einen Querschnitt durch das Sockelteil längs der Linie C-C in Fig. 48,
- Fig. 53: eine Ansicht des Arretierteils in Pfeilrichtung XIX in Fig. 49 und
- Fig. 54: einen Querschnitt durch das Arretierteil längs der Linie E-E in Fig. 50.

In den verschiedenen Figuren der Zeichnung sind gleiche bzw. gleichwirkende Teile und Komponenten stets mit den gleichen Bezugsziffern bezeichnet.

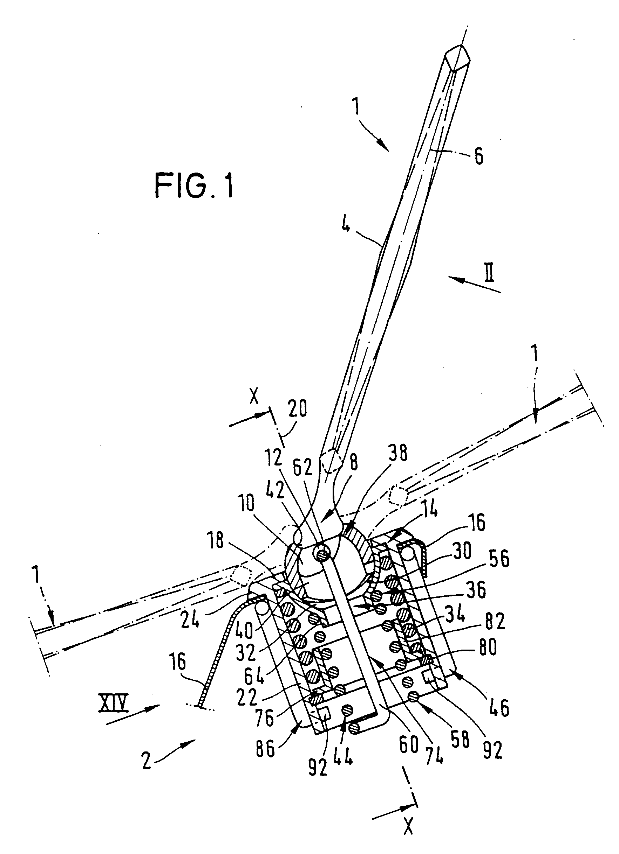

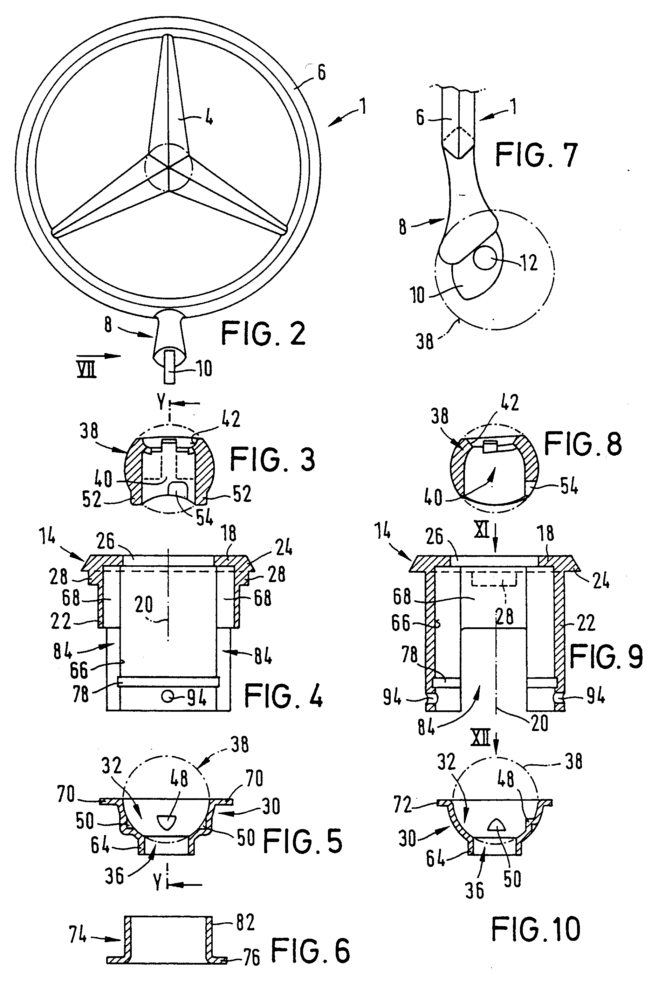

Wie zunächst in Fig. 1 zu erkennen ist, ist eine Kühlerfigur 1 schwenkbeweglich in einer erfindungsgemäßen Haltevorrichtung 2 gelagert. Bei der Kühlerfigur 1 kann es sich um beliebige Figuren handeln; wie insbesondere der Fig. 2 zu entnehmen ist, handelt es sich in den dargestellten Ausführungsbeispielen um eine geometrische Figur aus einem dreistrahligen Stern 4, der von einem Kreisring 6 umschlossen ist. Von dem Kreisring 6 erstreckt sich ein Figuren-Fuß 8 radial nach außen (nach unten), der eine sich etwa axial nach unten erstreckende Haltelasche 10 mit einer Queröffnung 12 aufweist (siehe hierzu auch Fig. 7).

Die Haltevorrichtung 2 weist ein Sockelteil 14 auf (siehe auch Fig. 4, 9 und 11), welches in eine insbesondere kreisförmige Montageöffnung eines Kfz-Karosserieblechteils 16 axial, d.h. in Richtung der Öffnungsachse der Montageöffnung, einsetzbar ist. Das Sockelteil 14 besitzt eine obere Basisplatte 18, an die sich erfindungsgemäß einstückig ein hohlzylindrisches, sich in Richtung einer Längsachse 20 senkrecht zur Basisplatte 18 erstreckendes Gehäuseteil 22 anschließt. Dabei erstreckt sich die insbesondere kreisförmige Basisplatte 18 in radialer Richtung mit einem umfänglichen Auflagesteg 24 über den äußeren Umfang des Gehäuseteils 22 nach außen. Der Auflagesteg 24 dient zur Auflage auf der Oberseite eines Öffnungsrandes der Montageöffnung, wenn - wie in Fig. 1 dargestellt - das Gehäuseteil 22 durch die Montageöffnung geführt ist. Die Basisplatte 18 weist eine vorzugsweise kreisförmige und zentrische Lageröffnung 26 auf. Im Winkelbereich zwischen dem Gehäuseteil 22 und der Unterseite des Auflagesteges 24 der Basisplatte 18 ist mindestens ein Ansatz 28 angeordnet. Gemäß Fig. 4 sind vorzugsweise zwei einander diametral gegenüberliegende, derartige Ansätze 28 vorhanden. Diese Ansätze 28 greifen in entsprechende Radialausnehmungen der Montageöffnungen des Karosserieblechteils 16 ein, wodurch die erfindungsgemäße Haltevorrichtung 2 verdrehfest in der Montageöffnung angeordnet ist.

Unterhalb der Basisplatte 18 ist in dem Gehäuseteil 22 ein Lager 30 angeordnet (siehe auch Fig. 5, 10 und 12). Dieses Lager besitzt eine in Richtung der Lageröffnung 26 der Basisplatte 18 offene, gelenkpfannenartige, konkave Lagervertiefung 32. Diese Lagervertiefung 32 besitzt einen oberen Öffnungsrand, der etwa mit der Lageröffnung 26 der Basisplatte 18 fluchtet, d.h. mit dieser etwa deckungsgleich ist. Das Lager 30 ist gegen Federkraft einer Schrauben-Druckfeder 34 von der Basisplatte 18 weg nach unten bewegbar gelagert. Im Grund der Lagervertiefung 32 besitzt das Lager 30 eine axiale Durchgangsöffnung 36.

In der Lagervertiefung 32 des Lagers 30 sitzt gelenkig eine Lagerkugel 38 (siehe auch Fig. 3 und 8), und zwar vorzugsweise derart, daß sie bereichsweise durch die Lageröffnung 26 hindurch nach oben über die Basisplatte 18 übersteht (Fig. 1). Diese Lagerkugel 38 besitzt ebenfalls eine axiale Durchgangsöffnung 40, die etwa mit der Durchgangsöffnung 36 des Lagers 30 deckungsgleich ist. Im oberen, dem Lager 30 abgekehrten Endbereich der Durchgangsöffnung 40 ist durch eine Erweiterung eine Aufnahmevertiefung 42 gebildet, die derart an den Figuren-Fuß 8 angepaßt ist, daß der Fuß 8 formschlüssig, d.h. unverrückbar, in dieser Aufnahmevertiefung 42 sitzt. Dabei erstreckt sich die Haltelasche 10 des Fußes 8 axial in die Durchgangsöffnung 40 der Lagerkugel 38 hinein.

Zur Halterung des Fußes 8 in der Aufnahmevertiefung 42 ist eine Figuren-Haltefeder 44 vorgesehen, die einendig durch die Durchgangsöffnungen 36 und 40 des Lagers 30 und der Lagerkugel 38 hindurch mit dem Fuß 8 bzw. dessen Haltelasche 10 verbunden ist und sich anderendig an dem Sockelteil 14 abstützt. Dabei steht diese Haltefeder 44 derart unter Federvorspannung, daß einerseits der Fuß 8 in der Aufnahmevertiefung 42 und hierdurch andererseits auch die Lagerkugel 38 in der Lagervertiefung 32 des Lagers 30 gehalten werden. Die Figuren-Haltefeder 44 ist dabei als axial angeordnete Schraubenfeder ausgebildet.

Zur Befestigung des Sockelteils 14 in der Montageöffnung des Karosserieblechteils 16 dient ein mit dem Sockelteil 14 verbundenes bzw. verbindbares Arretierteil 46, welches im montierten Zustand (Fig. 1) an der Unterseite des Öffnungsrandes der Montageöffnung unter Vorspannung anliegt und so den Auflagesteg 24 in Auflage auf dem Montageöffnungsrand hält. Verschiedene Ausführungsformen des Arretierteils 46 werden im folgenden noch genauer erläutert werden.

Wie sich insbesondere den Fig. 3, 5, 8 und 10 entnehmen läßt, besitzt das Lager 30 in bzw. auf der konkaven Lagervertiefung 32 Rastnocken 48 und/oder Rastvertiefungen 50. Auch die Lagerkugel 38 weist im Bereich ihrer in der Lagervertiefung 32 angeordneten Lagerfläche Rastnocken 52 (Fig. 3) und/oder Rastvertiefungen 54 (Fig. 8) auf. Durch diese Rastvertiefungen bzw. Rastnocken wird eine rastende Grund- bzw. Vorzugsstellung der Lagerkugel 38 in dem Lager 30 und damit auch der Kühlerfigur 1 erreicht.

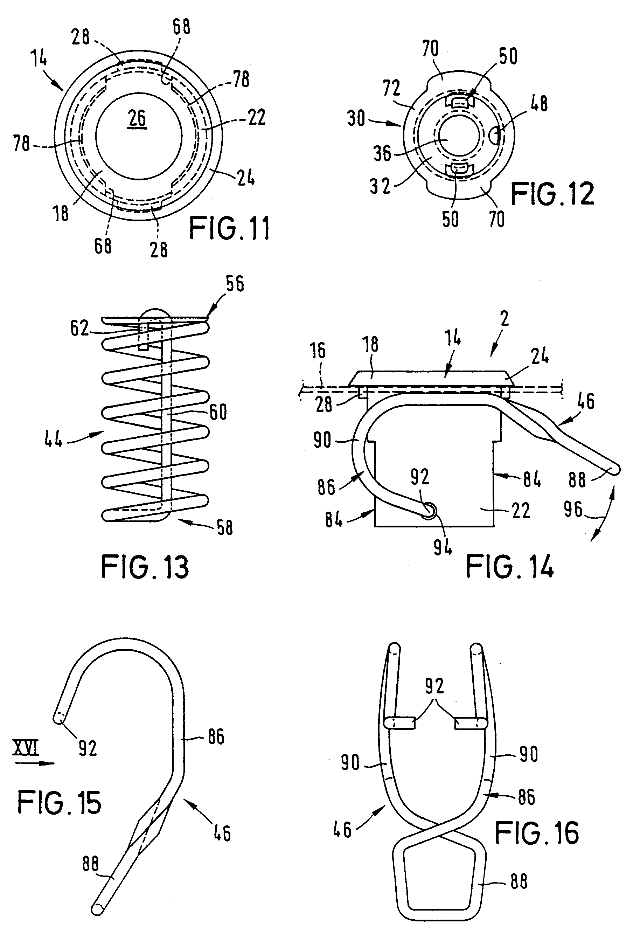

Erfindungsgemäß ist nun die Figuren-Haltefeder 44 als Schrauben-Druckfeder ausgebildet (siehe auch Fig. 13). Die Haltefeder 44 ist hierbei mit ihrem oberen, der Basisplatte 18 zugekehrten Ende 56 an dem Sockelteil 14 abgestützt sowie mit ihrem gegenüberliegenden, unteren Ende 58 mit dem Figuren-Fuß 8 verbunden (siehe Fig. 1). Hierbei ist es besonders vorteilhaft, wenn das untere Ende 58 der Haltefeder 44 über einen einstückigen Federdrahtabschnitt 60 mit dem Figuren-Fuß 8 verbunden ist, wobei dieser Federdrahtabschnitt 60 ausgehend von dem unteren Ende 58 derart umgebogen ist, daß er sich geradlinig, axial durch die Haltefeder 44 hindurch nach oben erstreckt. Am Ende des Federdrahtabschnittes 60 ist ein Haken 62 gebildet, der in die Queröffnung 12 der Haltelasche 10 des Fußes 8 eingreift. Das obere Ende 56 der Haltefeder 44 ist erfindungsgemäß mittelbar über das Lager 30 an dem Sockelteil 14 abgestützt, wobei sich das Lager 30 ja seinerseits an der Basisplatte 18 abstützt. Es ist weiterhin vorteilhaft, wenn das Lager 30 einen seine Durchgangsöffnung 36 umschließenden, sich axial nach unten erstreckenden Ringsteg 64 aufweist, dessen Außendurchmesser etwa dem inneren Windungsdurchmesser der Haltefeder 44 entspricht. Die Haltefeder 44 liegt hierbei mit dem oberen Ende 56 den Ringsteg 64 umschließend an der Unterseite des Lagers 30 an. Hierdurch wird vorteilhafterweise eine Zentrierung der Haltefeder 44 im Bereich ihres oberen Endes 56 erreicht.

Im Gegensatz zu der eingangs beschriebenen, aus dem Stand der Technik bekannten Haltevorrichtung, bei der das Lager an einem radialen Außenrand schwenkbeweglich in dem Sockelteil gelagert ist, ist gemäß der vorliegenden Erfindung das Lager 30 in axialer Richtung gegen Federkraft gänzlich frei nach unten bewegbar, dabei jedoch vorteilhafterweise gegen Verdrehen um die Längsachse 20 fixiert in dem Sockelteil 14 geführt. Hierdurch erhält die Figur 1 eine weiter verbesserte Beweglichkeit, was zu einer Erhöhung der Sicherheit beiträgt. Zur Führung des Lagers 30 besitzt das Gehäuseteil 22 erfindungsgemäß auf seiner inneren Umfangsfläche 66 mindestens eine, vorzugsweise jedoch zwei einander diametral gegenüberliegende, axial verlaufende Führungsnuten 68 (siehe Fig. 4, 9 und 11). Weiterhin weist das Lager 30 vorzugsweise zwei einander diametral gegenüberliegende, radiale Führungsstege 70 auf, die in axialer Richtung verschiebbar in den Führungsnuten 68 geführt sind. Die Führungsstege 70 sind am besten in den Fig. 5 und 12 zu erkennen.

Wie weiterhin in Fig. 1 zu erkennen ist, ist die das Lager 30 beaufschlagende Schrauben-Druckfeder 34 zwischen einem sich radial nach außen erstreckenden Ringsteg 72 des Lagers 30 und einem in dem Gehäuseteil 22 gehaltenen Druckring 74 unter Vorspannung angeordnet. Dabei umschließt die Schrauben-Druckfeder 34 die Figuren-Haltefeder 44 koaxial mit radialem Abstand. Der Druckring 74 (siehe auch Fig. 6) besteht aus einem ringscheibenförmigen, sich radial nach außen erstreckenden Ringteil 76, der sich an einem in einer inneren Ringnut 78 des Gehäuseteils 22 sitzenden Seegerring 80 abstützt, sowie aus einem sich axial und dabei - in dieser Ausführungsform - in Richtung des Lagers 30 erstreckenden, hohlzylindrischen Ringteil 82, der koaxial zwischen der Schrauben-Druckfeder 34 und der Figuren-Haltefeder 44 angeordnet ist. Hierbei besitzt der axiale Ringteil 82 vorzugsweise eine Wanddicke, die etwa gleich dem radialen Abstand zwischen der Schrauben-Druckfeder 34 und der Haltefeder 44 ist. Hierdurch wird vorteilhafterweise eine Zentrierung beider Federn 34 und 44 erreicht, und zwar wird die Haltefeder 44, deren unteres Ende 58 ja aufgrund der erfindungsgemäßen Ausgestaltung "frei" ist, in ihrem mittleren bis unteren Bereich zur Längsachse 20 zentrisch gehalten, wie dies in Fig. 1 gut zu erkennen ist.

In der Ausführungsform nach Fig. 1 besitzt das Gehäuseteil 22 vorteilhafterweise in seinem der Basisplatte 18 abgekehrten Endbereich mindestens eine, vorzugsweise jedoch zwei einander diametral gegenüberliegende, axiale Zugriffsausnehmungen 84 (siehe Fig. 4 und 9), die die Montage der erfindungsgemäßen Haltevorrichtung 2 erleichtern, indem der Innenraum des Gehäuseteils 22 besser zugänglich ist.

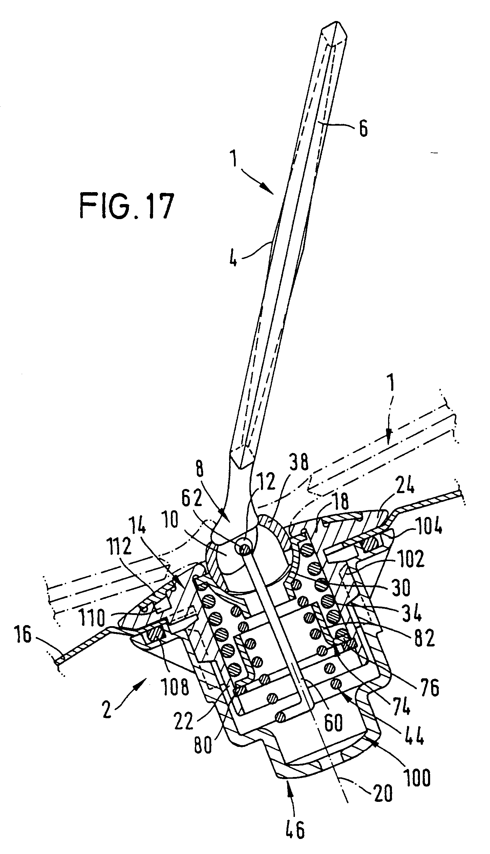

Ferner ist in der Ausführungsform nach Fig. 1 bis 16 das Arretierteil 46 erfindungsgemäß als schwenkbeweglich an dem Sockelteil 14, und zwar an dessen Gehäuseteil 22, gehalterter Federbügel 86 ausgebildet (siehe insbesondere Fig. 14, 15 und 16). Dieser Federbügel 86 besteht aus einem gebogenen Federdraht und weist zwei von einem Griffabschnitt 88 ausgehende, symmetrische, sich kreuzende und bogenförmig verlaufende Bügelschenkel 90 auf, deren Enden 92 zur Bildung eines Schwenklagers nach innen aufeinander zu abgebogen sind (Fig. 16). Diese Enden 92 greifen in jeweils eine von zwei einander diametral gegenüberliegenden, radialen Lageröffnungen 94 des Gehäuseteils 22 des Sockelteils 14 ein. Hierdurch ist der Federbügel 85 in Doppelpfeilrichtung 96 gemäß Fig. 14 schwenkbeweglich angeordnet. In Fig. 14 ist die Arretierstellung dargestellt, in der der Federbügel 86 mit geradlinigen Abschnitten der Bügelschenkel 90 unter elastischer Vorspannung von unten an dem Karosserieblechteil 16 anliegt. Durch einfaches Verschwenken des Federbügels 86 nach unten ist die erfindungsgemäße Haltevorrichtung 2 vorteilhafterweise sehr leicht ausbaubar und auch beliebig oft wieder einbaubar.

Die drei weiteren, in den Fig. 17 bis 34 veranschaulichten Ausführungsformen der erfindungsgemäßen Haltevorrichtung 2 unterscheiden sich von der ersten Ausführungsform nach Fig. 1 bis 16 insbesondere durch die Ausgestaltung des Arretierteils 46 in Verbindung mit dem Sockelteil 14. Die übrige Ausgestaltung entspricht im wesentlichen jeweils der ersten Ausführungsform, so daß auf die diesbezügliche Beschreibung verwiesen werden kann.

In diesen drei weiteren Ausführungsformen ist nun erfindungsgemäß jeweils das Arretierteil 46 als von unten lösbar auf das Gehäuseteil 22 des Sockelteils 14 aufgesetzte Verschlußkappe 100 ausgebildet.

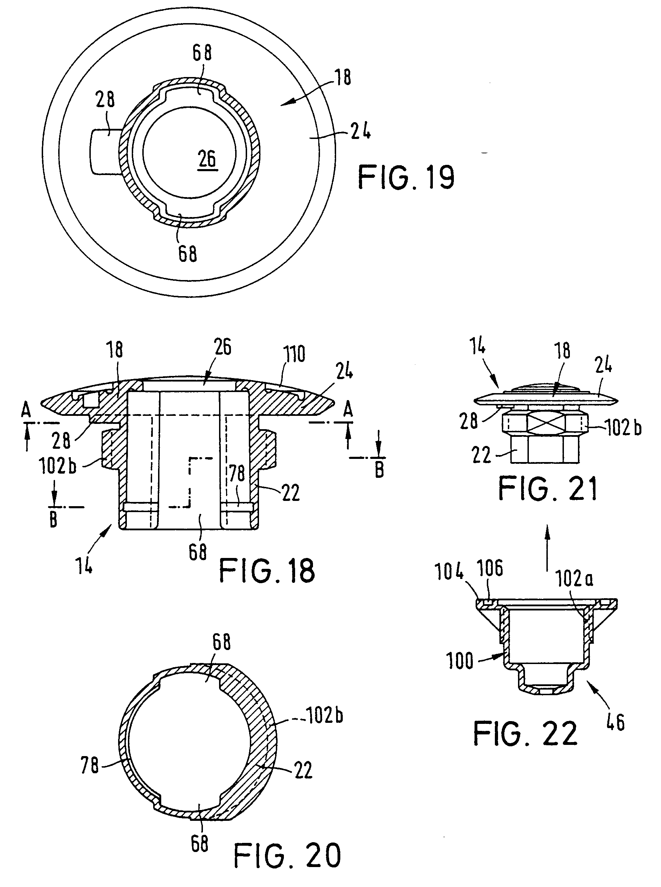

In der Ausführung nach Fig. 17 bis 22 ist die Verschlußkappe 100 erfindungsgemäß über ein Schraubgewinde 102 mit dem Gehäuseteil 22 verbunden, wozu die Verschlußkappe 100 ein Innengewinde 102a (Fig. 22) und das Gehäuseteil 22 ein entsprechendes Außengewinde 102b (Fig. 18) aufweisen. Das Außengewinde 102b des Gehäuseteils 22 ist hierbei im sich an die Basisplatte 18 anschließenden Bereich des Gehäuseteils 22 angeordnet, und das Innengewinde 102a ist entsprechend im der Öffnungsseite der Verschlußkappe 100 zugekehrten Bereich der Innenwandung der Verschlußkappe 100 gebildet. Zweckmäßigerweise besitzt die Verschlußkappe 100 auf ihrer der Basisplatte 18 zugekehrten Öffnungsseite einen sich radial nach außen erstreckenden Andruck-Ringsteg 104 mit einer in Richtung der Basisplatte offenen Ringnut 106, in der ein elastischer O-Ring 108 derart angeordnet ist, daß in der aufgeschraubten, arretierten Stellung der Verschlußkappe 100 (Fig. 17) der O-Ring 108 unter elastischer Vorspannung an der Unterseite des Karosserieblechteils 16 anliegt. Der O-Ring 108 bewirkt hierdurch einen Reibschluß zwischen der Verschlußkappe 100 und dem Karosserieblechteil 16, so daß vorteilhafterweise eine Sicherung gegen Lösen der Verschlußkappe 100 erreicht wird.

Wie weiterhin insbesondere aus Fig. 17 und 18 erkennbar ist, besitzt die Basisplatte 18 in dieser Ausführung auf ihrer Oberseite eine Ringnut 110, in die ein Ziereinlagering 112 eingelegt und auf geeignete Weise befestigt, z.B. verklebt, ist.

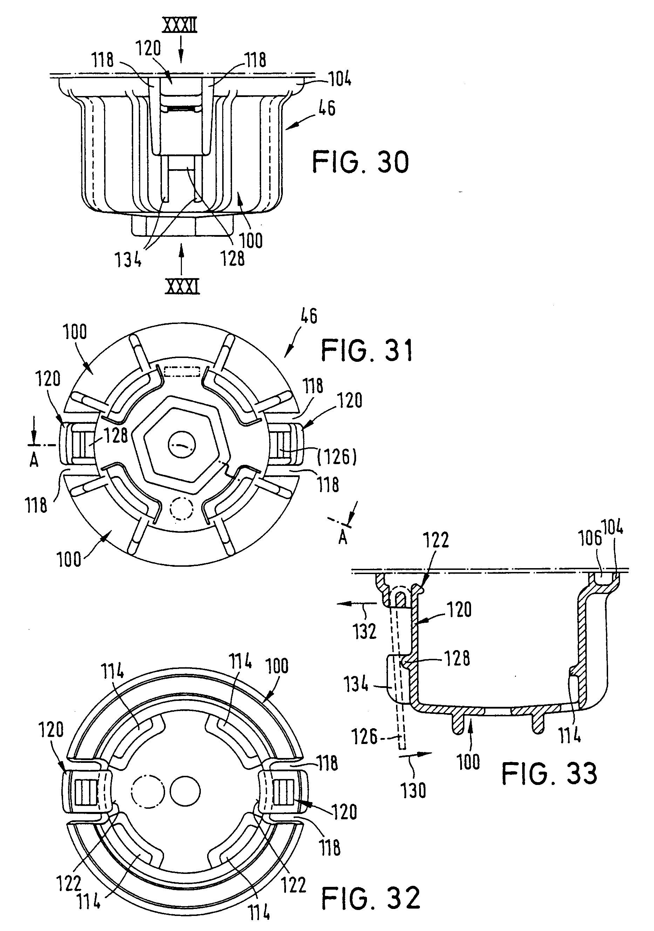

Im Bereich des Bodens der Verschlußkappe 100 kann diese einen in den Fig. 17 bis 22 nicht erkennbaren Sechskant aufweisen, über den mittels eines Schlüssels die Verschlußkappe 100 befestigt werden kann (vergleiche hierzu die Ausführung in Fig. 30 und 31).

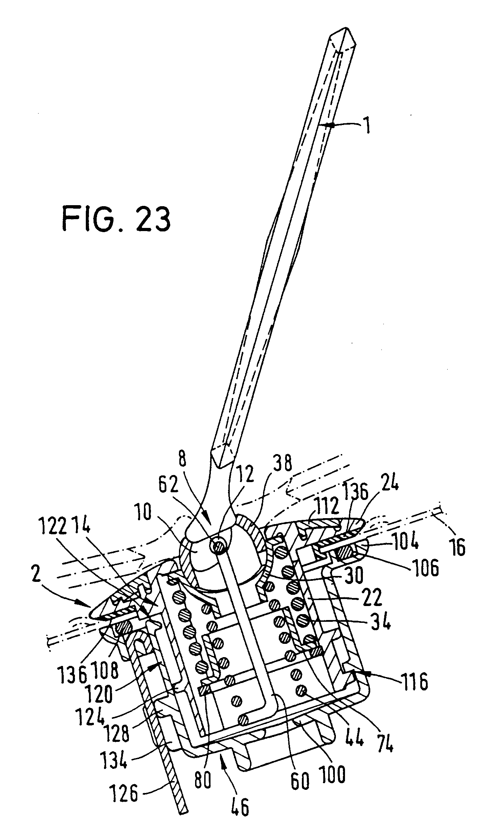

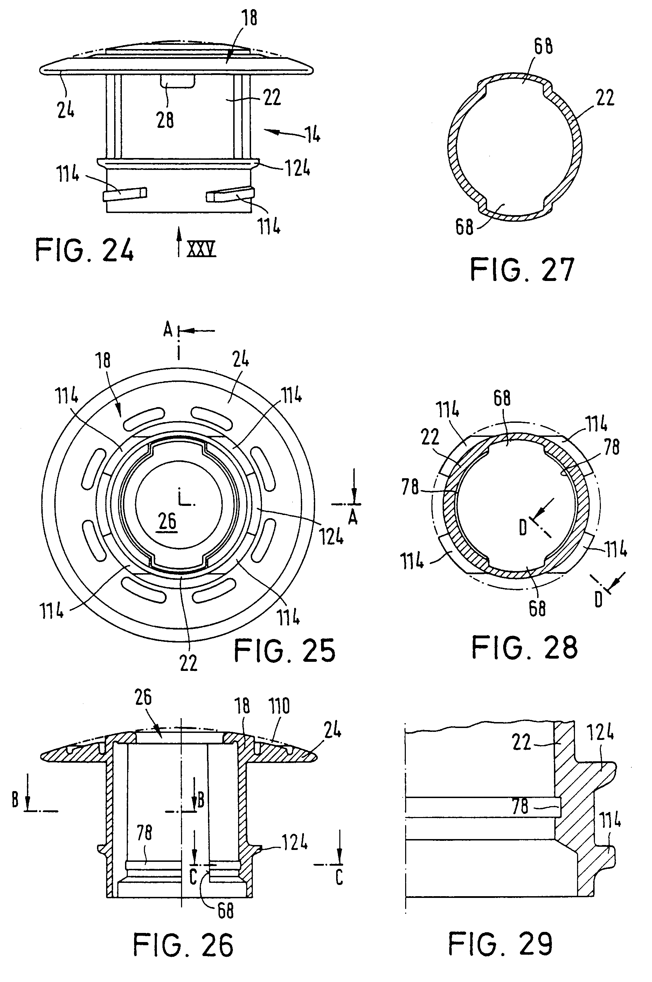

In der Ausführungsform nach Fig. 23 bis 33 ist die Verschlußkappe 100 erfindungsgemäß über ein aus mehreren einzelnen Gewindesegmenten 114 bestehendes Schnellverschlußgewinde 116 mit dem Gehäuseteil 22 verbunden. Das Gehäuseteil 22 des Sockelteils 14 besitzt hierzu auf seiner äußeren Umfangsfläche vorzugsweise vier umfänglich verteilt sowie voneinander beabstandete, stegartige Gewindesegmente 114 (Fig. 24). Auch die Verschlußkappe 100 besitzt auf ihrer inneren Umfangsfläche entsprechende, ebenfalls vorzugsweise vier umfänglich verteilt sowie voneinander beabstandete, stegartige Gewindesegmente 114 (Fig. 32). Dabei ist die in Umfangsrichtung gemessene Länge jedes Gewindesegmentes 114 kleiner als der in Umfangsrichtung gemessene Abstand zwischen zwei Gewindesegmenten 114, um ein axiales Aufschieben der Verschlußkappe 100 auf das Gehäuseteil 22 zu ermöglichen. Anschließend erfolgt dann eine Drehung der Verschlußkappe 100 relativ zu dem Gehäuseteil 22, wodurch die Gewindesegmente 114 in Eingriff miteinander gelangen und die Verschlußkappe 100 so mit dem Andruck-Ringsteg 104 fest gegen das Karosserieblechteil 16 verspannt wird. Ein Lösen erfolgt in umgekehrter Reihenfolge. Bei dieser beschriebenen Ausführung handelt es sich bezüglich der Handhabung praktisch um eine Art Bajonettverschluß.

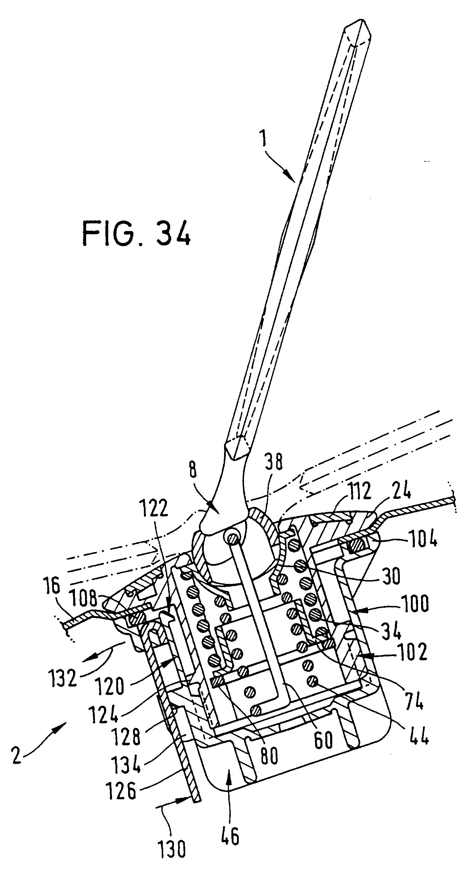

In einer ebenfalls in den Fig. 23 bis 33 veranschaulichten, vorteilhaften Weiterbildung der Erfindung weist die Verschlußkappe 100 im Bereich ihrer Umfangswandung vorzugsweise zwei einander diametral gegenüberliegende, durch axiale Freisparungen 118 gebildete Rastzungen 120 auf. Jede Rastzunge 120 besitzt an ihrem freien Ende ein radial nach innen weisendes Hakenende 122, welches beim axialen Aufschieben der Verschlußkappe 100 auf das Gehäuseteil 22 einen äußeren, radialen Ringsteg 124 des Gehäuseteils 22 rastend hintergreift. Dieses rastende Hintergreifen erfolgt dabei vorteilhafterweise bereits in einer axialen Stellung, in der die Verschlußkappe 100 noch nicht über das Schnellverschlußgewinde 116 mit dem Sockelteil 14 bzw. dem Gehäuseteil 22 verbunden ist. Aufgrund dieser erfindungsgemäßen Ausgestaltung ist die Verschlußkappe 100 stets auch dann gegen Verlust gesichert, wenn sich das Schnellverschlußgewinde 116 ungewollt lösen sollte. Ein Abrutschen der Verschlußkappe 100 von dem Gehäuseteil 22 wird nämlich durch die Rastzungen 120 verhindert, indem die Hakenenden 122 an dem Ringsteg 124 des Gehäuseteils 22 "hängenbleiben". Eine gewollte Demontage der Verschlußkappe 100 ist erfindungsgemäß dennoch möglich, wozu - wie insbesondere in Fig. 23 und 33 erkennbar ist - im freien Endbereich jeder Rastzunge 120 ein Hebel 126 befestigt ist, der sich axial über den Beginn der Rastzunge 120 hinaus erstreckt und in seinem etwa mittigen Bereich auf einem etwa am Beginn der Rastzunge 120 angeordneten,radialen Ansatz 128 der Verschlußkappe 100 aufliegt. Wie insbesondere in Fig. 33 zu erkennen ist, bildet hierdurch jeweils der Ansatz 128 einen Schwenkpunkt bzw. ein Schwenklager für den Hebel 126, so daß durch eine Bewegung des freien Hebelendes in Pfeilrichtung 130 nach innen das gegenüberliegende Hebelende zusammen mit der Rastzunge 120 sich in Pfeilrichtung 132 radial nach außen bewegt, wodurch das Hakenende 122 den Ringsteg 124 des Gehäuseteils 22 freigibt. Die Verschlußkappe 100 kann so von dem Sockelteil 14 abgenommen werden. Zur Lagefixierung des Hebels 126 ist es weiterhin vorteilhaft, wenn jeweils beidseitig ein radialer Steg 134 der Verschlußkappe 100 angeordnet ist.

Wie weiterhin in Fig. 23 dargestellt ist, ist es vorteilhaft, wenn zwischen dem Auflagesteg 24 der Basisplatte 18 und dem Öffnungsrand der Montageöffnung des Karosserieblechteils 16 eine elastische Zwischenlage 136 angeordnet ist, die vorzugsweise den Öffnungsrand zumindest bereichsweise umgreift.

Im übrigen entspricht die Ausführungsform nach Fig. 23 bis 33 derjenigen der Fig. 17 bis 22.

Bei der in Fig. 34 dargestellten, vierten Ausführungsform der Erfindung handelt es sich hinsichtlich der Verschlußkappe 100 und des Gehäuseteils 22 praktisch um eine Kombination der Ausführungen nach Fig. 17 und Fig. 23. Dies bedeutet, daß hier die Verschlußkappe 100 mit dem Gehäuseteil 22 wieder über ein "normales" Schraubgewinde 102 verbunden ist, zusätzlich aber auch die bei der Ausführung nach Fig. 23 bis 33 bereits beschriebenen Rastzungen 120 vorgesehen sind. Hierbei ist lediglich unterschiedlich, daß das Außengewinde 102b des Gehäuseteils 22 im der Basisplatte 18 abgekehrten Endbereich angeordnet ist, wobei entsprechend das Innengewinde 102a der Verschlußkappe 100 im dem Kappenboden zugekehrten Bereich gebildet ist. Im übrigen kann auf die obigen Erläuterungen verwiesen werden.

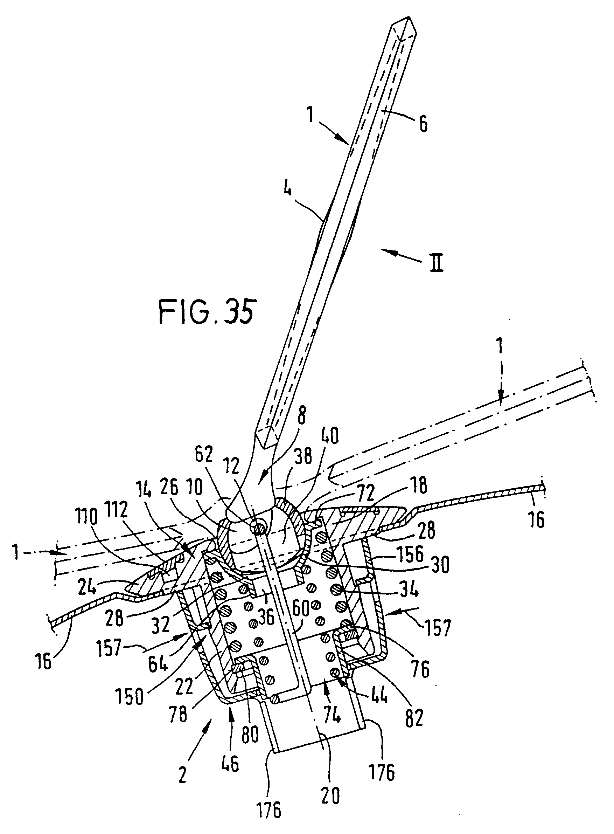

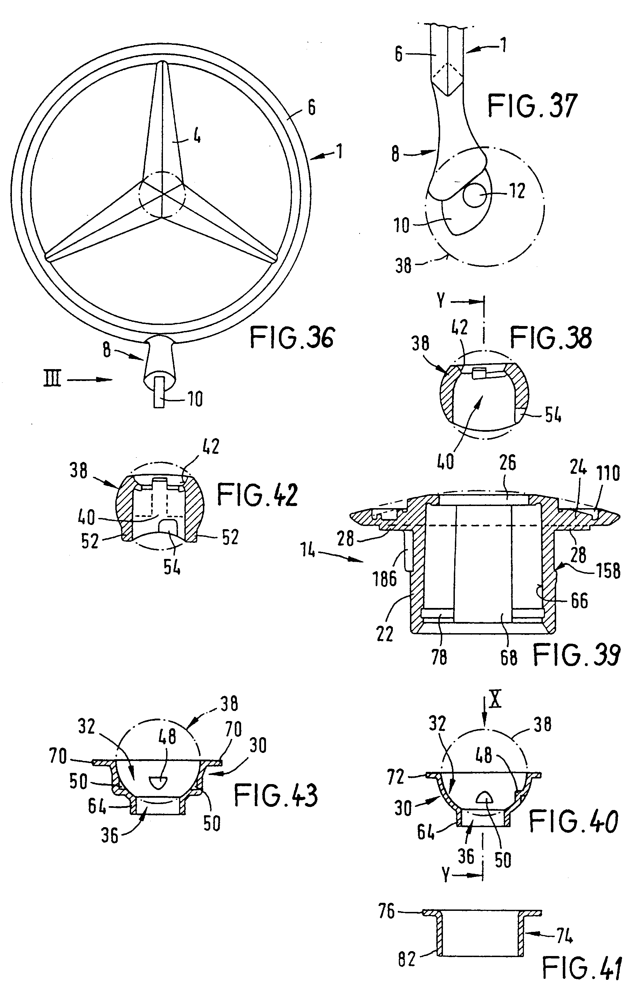

In den Fig. 35 bis 54 ist nun noch eine weitere, besonders vorteilhafte Ausführungsform der erfindungsgemäßen Haltevorrichtung 2 dargestellt, die sich von den übrigen, bereits beschriebenen Ausführungen wiederum durch eine alternative Ausgestaltung des Arretierteils 46 und durch dessen Zusammenwirken mit dem Sockelteil 14 unterscheidet. Die übrige Ausgestaltung entspricht - insbesondere was die Art der Lagerung und Halterung der Kühlerfigur 1 betrifft - im wesentlichen den übrigen Ausführungen, wobei die Fig. 36, 37, 38, 40, 42, 43 und 45 im wesentlichen den Fig. 2, 7, 8, 10, 3, 5 bzw. 13 entsprechen. Deshalb sind auch hier wiederum gleiche bzw. sich entsprechende Teile mit den gleichen Bezugsziffern bezeichnet, so daß auf die diesbezüglichen, obigen Beschreibungsteile verwiesen werden kann.

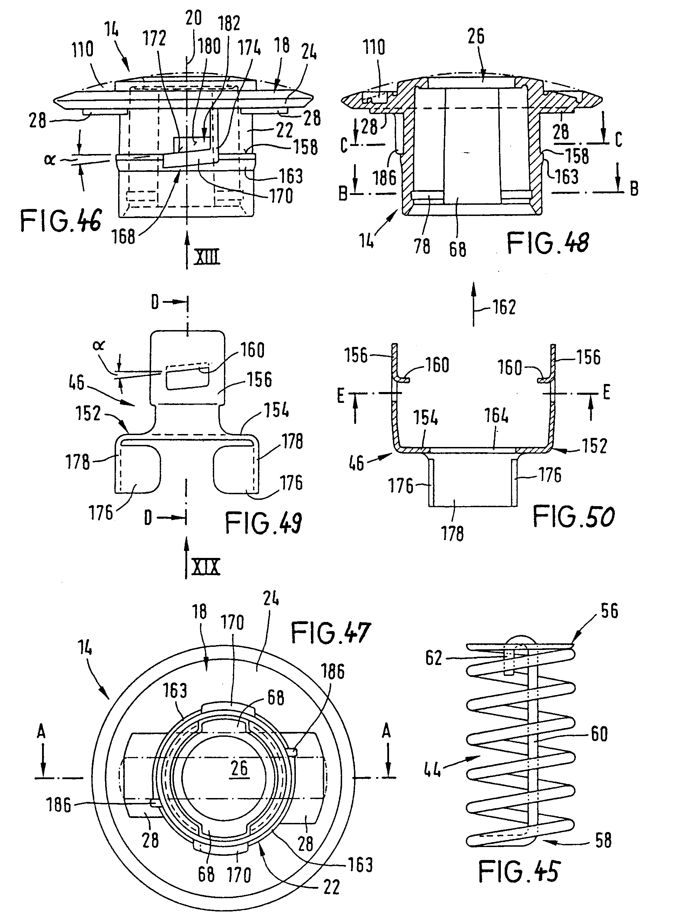

Wie sich nun vor allem den Fig. 35, 46, 48 bis 50 sowie 52 bis 54 entnehmen läßt, ist bei dieser Ausführungsform das Arretierteil 46 erfindungsgemäß über eine schnappbare Formschlußverbindung 150 an dem Gehäuseteil 22 des Sockelteils 14 gehaltert. Hierzu ist das Arretierteil 46 als etwa U-förmige Klammer 152 (siehe insbesondere Fig. 49 und 50) mit einem senkrecht zur Längsachse 20 angeordneten Boden 154 und zwei sich von dem Boden 154 axial in Richtung der Kühlerfigur 1 bzw. der Basisplatte 18 nach oben erstreckenden Andruckschenkeln 156 ausgebildet. Der Boden 154 ist auf der der Kühlerfigur 1 abgekehrten,unteren Stirnseite des Sockelteils 14 angeordnet und von letzterem vorzugsweise über einen geringen Spalt axial beabstandet, wie dies in Fig. 35 zu erkennen ist. Es ist jedoch ebenfalls möglich, zwischen dem Boden 154 und der unteren Stirnseite des Sockelteils 14 eine nicht dargestellte Ringscheibe insbesondere aus einem gute Gleiteigenschaften aufweisenden Kunststoffmaterial spielfrei anzuordnen. Die Andruckschenkel 156 liegen auf einander diametral gegenüberliegenden Seiten neben dem Außenumfang des Sockelteils 14 bzw. des Gehäuseteils 22 (Fig. 35) und sind in radialer Richtung derart federelastisch ausgebildet, daß sie unter einer Federvorspannung radial nach innen gegen das Gehäuseteil 22 des Sockelteils 14 gedrängt werden (s. die Pfeilrichtung 157 in Fig. 35).

Die erfindungsgemäße schnappbare Formschlußverbindung 150 wird einerseits von einer der Kühlerfigur 1 bzw. der Basisplatte 18 zugekehrten, umfänglichen Ringstufe 158 eines auf dem Außenumfang des Gehäuseteils 22 des Sockelteils 14 angeordneten Ringsteges (siehe hierzu insbesondere Fig. 46 und 48) sowie andererseits von radial nach innen weisenden Raststegen 160 der Andruckschenkel 156 gebildet (siehe insbesondere Fig. 49 und 50), wobei die Raststege 160 die Ringstufe 158 in der in Fig. 35 dargestellten, von unten, d.h. in Pfeilrichtung 162 in Fig. 50, axial auf das Gehäuseteil 22 des Sockelteils 14 aufgeschobenen Stellung des Arretierteils 46 rastend und formschlüssig in axialer Richtung hintergreifen, wodurch das Arretierteil 46 unverlierbar, dabei aber in Umfangsrichtung verdrehbar an dem Sockelteil 14 gehaltert ist. Hierbei gleiten die Raststege 160 über den Außenumfang des Gehäuseteils 22 und über die Ringstufe 158 hinweg. Die Raststege 160 sind vorzugsweise - wie insbesondere in Fig. 49 und 50 erkennbar - als freigeschnittene und nach innen gebogene Laschen der einstückig aus Federstahlblech bestehenden Klammer 152 ausgebildet.

Wie sich insbesondere der Fig. 46 entnehmen läßt, ist es weiterhin zweckmäßig, wenn die Ringstufe 158 bzw. der diese aufweisende Ringsteg des Gehäuseteils 22 in der der Basisplatte 18 abgekehrten Richtung über eine Auflaufschrägfläche 163 in die Umfangsfläche des Gehäuseteils 22 des Sockelteils 14 übergeht. Hierdurch wird beim Montieren der erfindungsgemäßen Haltevorrichtung 2 vorteilhafterweise das axiale Aufschieben des Arretierteils 46 bzw. der Klammer 152 in Pfeilrichtung 162 (Fig. 50) auf das Sockelteil 14 erleichtert. Über die Auflaufschrägfläche 163 werden die Andruckschenkel 156 beim Aufschieben radial nach außen gespreizt, bis sie aufgrund ihrer Federelastizität hinter der Rastkante 158 radial nach innen einschnappen. Die Rastkante 158 bildet eine Wirkfläche, die zur Längsachse 20 in einem Hinterschneidungswinkel von ≧ 90° angeordnet ist (im dargestellten Beispiel = 90°), wodurch ein reiner Formschluß in axialer Richtung erreicht wird.

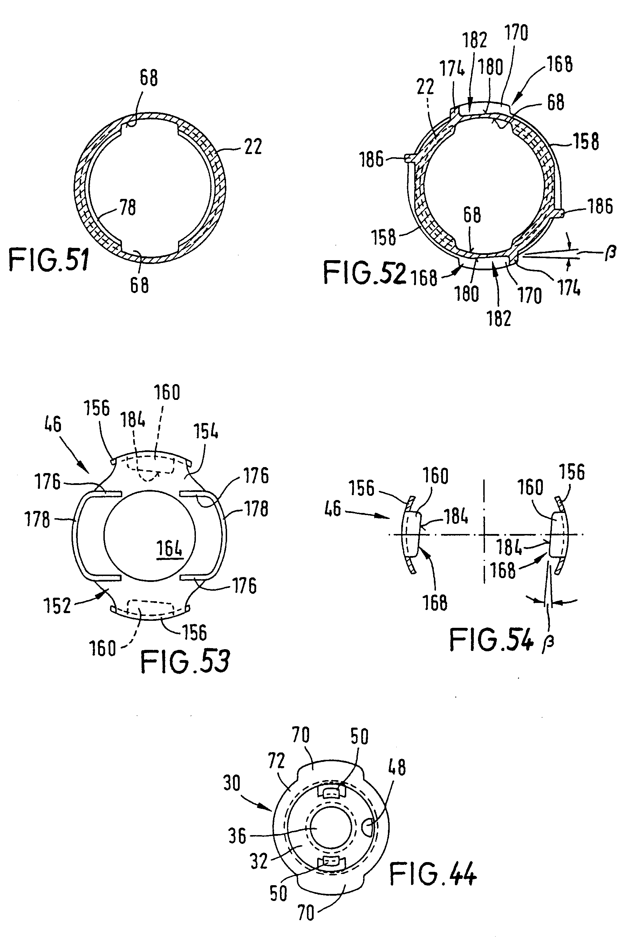

Der oben in Bezug auf die erste Ausführungsform nach den Fig. 1 bis 16 bereits beschriebene Druckring 74 ist in dieser Ausführungsform der Erfindung derart umgekehrt angeordnet, daß sich der axiale Ringteil 82, ausgehend von dem radialen Ringteil 76, axial in eine der Kühlerfigur 1 bzw. der Basisplatte 18 abgekehrte Richtung (nach unten) erstreckt. Der Boden 154 der das Arretierteil 46 bildenden Klammer 152 besitzt eine zentrische, insbesondere kreisförmige Öffnung 164 (siehe insbesondere Fig. 53), in die in der über die schnappbare Formschlußverbindung 150 gehalterten Stellung (Fig. 35) der axiale Ringteil 82 des Druckringes 74 eingreift. Die Öffnung 164 besitzt dabei vorteilhafterweise einen Durchmesser,der nur geringfügig größer als der Außendurchmesser des axialen Ringteils 82 des Druckrings 74 ist, so daß erfindungsgemäß eine gute Führung des Arretierteils 46 zum Verdrehen um die Längsachse 20 erreicht wird.

Erfindungsgemäß ist nun weiterhin bei der Ausführung nach den Fig. 35 bis 54 das Arretierteil 46 in der Arretierstellung mit dem Sockelteil 14 zusätzlich über ein die Vorspannung erzeugendes Schnellverschlußgewinde 168 verbunden. Dieses Schnellverschlußgewinde 168 ist einerseits von einzelnen, in Umfangsrichtung voneinander beabstandeten, stegartigen Gewindesegmenten 170 gebildet, die sich radial von dem Außenumfang des Gehäuseteils 22 des Sockelteils 14 nach außen erstrecken. Insbesondere sind zwei einander diametral gegenüberliegende und - bezogen auf ihre in axialer Richtung verlaufende Mittellinie - jeweils um 90° in Umfangsrichtung zu der Mitte der Ansätze 28 des Sockelteils 14 versetzt angeordnete Gewindesegmente 170 vorgesehen (siehe insbesondere Fig. 46 und 52). Jedes Gewindesegment 170 besitzt eine der Kühlerfigur 1 bzw. der Basisplatte 18 zugekehrte Schrägfläche 172 (Fig. 46), die ausgehend von der Ringstufe 158 in einem Steigungswinkel α von vorzugsweise etwa 5° in Umfangsrichtung und schräg nach oben in Richtung der Basisplatte 18 verläuft. Andererseits wird das erfindungsgemäße Schnellverschlußgewinde 168 von den Raststegen 160 der Andruckschenkel 156 gebildet, die als "Gegen-Gewindesegmente" mit den Gewindesegmenten 170 des Sockelteils 14 zusammenwirken. Wie sich insbesondere aus Fig. 49 entnehmen läßt, sind die Raststege 160 hierzu ebenfalls in einem Steigungswinkel α von vorzugsweise ca. 5° schräg zu einer zur Längsachse 20 senkrechten Ebene angeordnet. Hierbei ist natürlich die in Umfangsrichtung gemessene Breite jedes Andruckschenkels 156 des Arretierteils 46 kleiner als der in Umfangsrichtung gemessene, lichte Abstand zwischen den Gewindesegmenten 170 des Arretierteils 46, um so das oben beschriebene axiale Aufschieben der Andruckschenkel 156 des Arretierteils 46 auf das Gehäuseteils 22 des Sockelteils 14 zu ermöglichen. Jedes Gewindesegment 170 geht an seinem in Steigungsrichtung weisenden Ende in einen Endanschlagsteg 174 über (Fig. 46 und 52).

Diese erfindungsgemäße Verbindung zwischen dem Arretierteil 46 und dem Sockelteil 14 funktioniert nun wie folgt. Bei der Montage der Haltevorrichtung 2 wird - wie bereits erwähnt - das Arretierteil 46 auf das Sockelteil 14 axial aufgeschoben, wobei die Raststege 160 die Ringstufe 158 jeweils im in Umfangsrichtung zwischen den Gewindesegmenten 170 liegenden Bereich hintergreifen. Das Arretierteil 46 wird ganz in die Vormontage- oder Lösestellung verdreht, in der die Andruckschenkel 156 axial mit den Ansätzen 28 des Sockelteils 14 fluchtend angeordnet sind. Hierdurch kann die Haltevorrichtung 2 in die Montageöffnung des Karosserieblechteils 16 eingesetzt werden, indem die Andruckschenkel 156 durch die zur Verdrehsicherung vorgesehenen, radialen Ausnehmungen der Montageöffnung geführt werden können. Hierzu sind die Andruckschenkel 156 natürlich in Umfangsrichtung gesehen schmaler als die lichte Weite der radialen Ausnehmungen der Montageöffnung. Die Ansätze 28 greifen dann formschlüssig in die Öffnungsausnehmungen ein, wodurch eine Verdrehsicherung erreicht wird. Nachfolgend kann nun das erfindungsgemäße Arretierteil 46 um ca. 90° um die Längsachse 20 in die Arretierstellung verdreht werden, wobei die Raststege 160 über die Ringstufe 158 hinweg und nachfolgend auf die Schrägflächen 172 der Gewindesegmente 170 gleiten. Hierdurch wird eine Vorspannung erzeugt, mit der die Andruckschenkel 156 mit ihren der Kühlerfigur 1 bzw. der Basisplatte 18 zugekehrten Enden auf der Unterseite des Montageöffnungsrandes des Karosserieblechteils 16 zur Auflage gelangen. Hierdurch ist die erfindungsgemäße Haltevorrichtung 2 fest und sicher in der Montageöffnung gehaltert.

In einer vorteilhaften Weiterbildung dieser erfindungsgemäßen Ausführungsform nach Fig. 35 bis 54 wird das beschriebene, manuelle Verdrehen des Arretierteils 46 noch dadurch erleichtert, daß das Arretierteil 46 Grifflaschen 176 besitzt, die vorzugsweise einstückig an den Boden 154 der Klammer 152 angebunden sind. Im dargestellten Ausführungsbeispiel der Erfindung (siehe insbesondere Fig. 49 und 53) schließt sich an den Boden 154 jeweils im mittig zwischen den Andruckschenkeln 156 liegenden Bereich seines Außenrandes eine von zwei diametral gegenüberliegenden, axial von dem Sockelteil 14 weg verlaufenden Laschen 178 an. Jede dieser Laschen 178 geht vorzugsweise in zwei seitliche, etwa tangential zu der zentrischen Öffnung 164 des Bodens 154 verlaufende Grifflaschen 176 über (Fig. 53). Hierdurch wird eine sehr gute Griffmöglichkeit für die das Arretierteil 46 drehenden Finger (Daumen und Zeigefinger) geschaffen.

Es ist hierbei ferner besonders vorteilhaft, wenn das Arretierteil 46 zumindest im Bereich der Andruckschenkel 156, vorzugsweise jedoch vollständig mit einer Oberflächenbeschichtung aus einem schmierfähigen Material, insbesondere Zink-Aluminium mit Teflon-Anteilen, versehen ist. Hierdurch wird vorteilhafterweise die Reibung zwischen den auf- bzw. aneinanderliegenden Teilen von Sockelteil 14 und Arretierteil 46 auf ein Mindestmaß reduziert, da das genannte Beschichtungsmaterial bei Reibungsbeanspruchung kontinuierlich Schmierstoffe (insbesondere Teflon) abgibt, was zu einer guten Handhabung (sehr leichte Verdrehbarkeit) beiträgt. Alternativ hierzu wäre es aber ebenfalls möglich, insbesondere im Bereich der freien Enden der Andruckschenkel 156 und/oder im Bereich der Raststege 160 Aufsteckschuhe aus einem derartigen, schmierfähigen Material vorzusehen (nicht dargestellt).

In einer besonders vorteilhaften Weiterbildung der Erfindung ist das erfindungsgemäße Schnellverschlußgewinde 168 in der Arretierstellung insbesondere über eine Rastverbindung zusätzlich gegen ungewolltes Lösen gesichert. Hierzu weist gemäß Fig. 46 und 52 das Gehäuseteil 22 des Sockelteils 14 auf seinem Außenumfang im Bereich jedes der Gewindesegmente 170 eine sekantenartige Schrägfläche 180 auf, die ausgehend von dem etwa im Übergangsbereich zwischen der Ringstufe 158 und der Schrägfläche 172 des jeweiligen Gewindesegmentes 170 liegenden Bereich der zylindrischen Umfangsfläche des Gehäuseteils 22 eine Rastvertiefung 182 bildend den Außendurchmesser des Gehäuseteils 22 in Steigungsrichtung des jeweiligen Gewindesegmentes 170 verringert. Der Hinterschneidungswinkel β der Schrägflächen 180 beträgt dabei gemäß Fig. 52 vorzugsweise ca. 5°. Wie sich weiterhin insbesondere der Fig. 54 entnehmen läßt, besitzen die Raststege 160 der Andruckschenkel 156 des Arretierteils 46 auf dem Umfang des Gehäuseteils 22 aufliegende Auflagekanten 184, die in Anpassung an die Schrägflächen 180 des Gehäuseteils 22 ebenfalls in einem Winkel β von vorzugsweise ca. 5° schräg verlaufen, und zwar derart, daß die Raststege 160 mit den Auflagekanten 184 praktisch vollflächig (linienförmig) auf den Schrägflächen 180 aufliegen. Durch diese vorteilhafte Ausgestaltung rasten die Andruckschenkel 156 aufgrund ihrer radialen, elastischen Vorspannung in der Arretierstellung mit den Raststegen 160 radial nach innen in die Rastvertiefungen 182 des Gehäuseteils 22 ein, so daß für ein nachfolgendes Lösen, d.h. zum Zurückverdrehen des Arretierteils 46 in die Lösestellung, zunächst eine Rastkraft überwunden werden muß, was eine Sicherung gegen ungewolltes Lösen darstellt.

Der Vollständigkeit halber sei noch erwähnt, daß das Gehäuseteil 22 des Sockelteils 14 für jeden der Andruckschenkel 156 einen weiteren Anschlagsteg 186 im Bereich der Ansätze 28 aufweist, wobei diese Anschlagstege 186 die Vormontage- bzw. Lösestellung des Arretierteils 46 definieren (siehe hierzu insbesondere die Fig. 47, 48 und 52).

Die Erfindung ist nicht auf die dargestellten und beschriebenen Ausführungsbeispiele beschränkt, sondern umfaßt auch alle im Sinne der Erfindung gleichwirkenden Ausführungen. Insbesondere ist darauf hinzuweisen, daß anstelle der Lösesicherung der Verschlußkappe 100 über den elastischen O-Ring 108 auch beispielsweise geeignete Rastmittel vorgesehen sein können. Ferner liegt es im Rahmen der Erfindung, wenn der Figuren-Fuß 8 einstückig oder auf andere Weise unlösbar bzw. starr (unbeweglich) mit der Lagerkugel 38 verbunden ist.

## Patentansprüche

1. Haltevorrichtung (2) mit einer Kühlerfigur (1) zur Montage in einer Montageöffnung eines Karosserieblechteils (16), bestehend aus einem die Kühlerfigur (1) insbesondere über eine Schwenklagerung sowie federelastisch über eine Figuren-Haltefeder (44) halternden, in Richtung seiner Längsachse (20) in die Montageöffnung einsetzbaren Sockelteil (14) mit einem umfänglichen Auflagesteg (24) zur Auflage auf der Oberseite des Montageöffnungsrandes sowie aus einem mit dem Sockelteil (14) verbundenen Arretierteil (46), das in montiertem Zustand zur Halterung des Sockelteils (14) in der Montageöffnung unter Vorspannung an der Unterseite des Montageöffnungsrandes anliegt, wobei das Arretierteil (46) unmittelbar, unabhängig von der Figuren-Haltefeder (44) mit dem Sockelteil (14) verbunden ist und wobei die Figuren-Haltefeder (44) als Schrauben-Druckfeder ausgebildet ist, deren oberes, dem Auflagesteg (24) zugekehrtes Ende (56) an dem Sockelteil (14) abgestützt ist, und deren gegenüberliegendes, unteres Ende (58) mit dem Figuren-Fuß (8) verbunden ist, **dadurch gekennzeichnet,** daß das untere Ende (58) der Figuren-Haltefeder (44) über einen sich einstückig anschließenden, umgebogenen, sich axial durch die Haltefeder (44) hindurch nach oben erstreckenden Federdrahtabschnitt (60) mit dem Figuren-Fuß (8) verbunden ist.

2. Haltevorrichtung nach Anspruch 1,
**dadurch gekennzeichnet,** daß das Sockelteil (14) eine den Auflagesteg (24) bildende Basisplatte (18) mit einer zentrischen, axialen Lageröffnung (26), ferner ein unterhalb der Basisplatte (18) gegen Federkraft von dieser weg nach unten bewegbar angeordnetes Lager (30) mit einer in Richtung der Lageröffnung (26) offenen, gelenkpfannenartigen Lagervertiefung (32) und einer im Grund der Lagervertiefung (32) angeordneten, axialen Durchgangsöffnung (36), und weiterhin eine gelenkig in der Lagervertiefung (32) des Lagers (30) sitzende und mit einem Fuß (8) der Kühlerfigur (1) verbundene Lagerkugel (38) aufweist, wobei die Lagerkugel (38) und der Figuren-Fuß (8) vorzugsweise zweistückig ausgebildet sind und die Lagerkugel (38) eine axiale Durchgangsöffnung (40) und eine im oberen Endbereich der Durchgangsöffnung (40) gebildete Aufnahmevertiefung (42) besitzt, in der der Figuren-Fuß (8) der Kühlerfigur (1) sitzt, wobei die als axial angeordnete Schraubenfeder ausgebildete Figuren-Haltefeder (44) einendig durch die Durchgangsöffnung (36) des Lagers (30) sowie vorzugsweise durch die Durchgangsöffnung (40) der Lagerkugel (38) hindurch mit dem Figuren-Fuß (8) verbunden und anderendig an dem Sockelteil (14) abgestützt ist sowie unter die Lagerkugel (38) in dem Lager (30) und vorzugsweise den Figuren-Fuß (8) in der Aufnahmevertiefung (42) der Lagerkugel (38) haltender Vorspannung steht.

3. Haltevorrichtung nach Anspruch 2,
**dadurch gekennzeichnet,** daß das obere Ende (56) der Figuren-Haltefeder (44) mittelbar über das Lager (30) an dem Sockelteil (14) abgestützt ist.

4. Haltevorrichtung nach Anspruch 3,
**dadurch gekennzeichnet,** daß das Lager (30) einen seine Durchgangsöffnung (36) umschließenden, sich axial von der Lagerkugel (38) weg nach unten erstreckenden Ringsteg (64) aufweist, wobei die Figuren-Haltefeder (44) mit ihrem oberen Ende (56) diesen Ringsteg (64) umschließend an dem Lager (30) anliegt.

5. Haltevorrichtung nach einem oder mehreren der Ansprüche 2 bis 4,
**dadurch gekennzeichnet,** daß das Lager (30) in axialer Richtung gegen Federkraft frei nach unten bewegbar sowie gegen Verdrehen um die Längsachse (20) fixiert in dem Sockelteil (14) geführt ist.

6. Haltevorrichtung nach einem oder mehreren der Ansprüche 1 bis 5,
**dadurch gekennzeichnet,** daß das Sockelteil (14) ein axiales, vorzugsweise einstückig mit der Basisplatte (18) verbundenes, hohlzylindrisches Gehäuseteil (22) aufweist.

7. Haltevorrichtung nach Anspruch 6,
**dadurch gekennzeichnet,** daß das Gehäuseteil (22) auf seiner inneren Umfangsfläche (66) mindestens eine, vorzugsweise zwei einander diametral gegenüberliegende, axial verlaufende Führungsnuten (68) aufweist, in die das Lager (30) jeweils mit einem sich radial nach außen erstreckenden Führungssteg (70) eingreift.

8. Haltevorrichtung nach einem oder mehreren der Ansprüche 2 bis 7,
**dadurch gekennzeichnet,** daß zwischen einem sich radial nach außen erstreckenden Ringsteg (72) des Lagers (30) und einem in dem Gehäuseteil (22) gehaltenen Druckring (74) eine die Figuren-Haltefeder (44) koaxial mit Abstand umschließende Schrauben-Druckfeder (34) unter Vorspannung angeordnet ist.

9. Haltevorrichtung nach Anspruch 8,
**dadurch gekennzeichnet,** daß der Druckring (74) einen ringscheibenförmigen, sich radial nach außen erstreckenden und sich an einem in einer inneren Ringnut (74) des Gehäuseteils (22) sitzenden Seegerring (80) abstützenden Ringteil (76) sowie einen sich axial erstreckenden,hohlzylindrischen und die Haltefeder (44) koaxial umschließenden Ringteil (82) aufweist.

10. Haltevorrichtung nach Anspruch 9,
**dadurch gekennzeichnet,** daß sich der hohlzylindrische Ringteil (82) in Richtung des Lagers (30) und koaxial zwischen die Schrauben-Druckfeder (34) und die Figuren-Haltefeder (44) erstreckt, wobei vorzugsweise der axiale Ringteil (82) eine Wanddicke aufweist, die etwa gleich dem radialen Abstand zwischen der Schrauben-Druckfeder (34) und der Figuren-Haltefeder (44) ist.

11. Haltevorrichtung nach einem oder mehreren der Ansprüche 6 bis 10,
**dadurch gekennzeichnet,** daß das Gehäuseteil (22) in seinem der Basisplatte (18) abgekehrten Endbereich mindestens eine, vorzugsweise zwei einander diametral gegenüberliegende, axiale Zugriffsausnehmungen (84) aufweist.

12. Haltevorrichtung nach einem oder mehreren der Ansprüche 1 bis 11,
**dadurch gekennzeichnet,** daß das Arretierteil (46) als schwenkbeweglich an dem Sockelteil (14) gehalterter Federbügel (86) ausgebildet ist.

13. Haltevorrichtung nach einem oder mehreren der Ansprüche 1 bis 11,
**dadurch gekennzeichnet,** daß das Arretierteil (46) als von unten lösbar auf das Gehäuseteil (22) des Sockelteils (14) aufgesetzte Verschlußkappe (100) ausgebildet ist.

14. Haltevorrichtung nach Anspruch 13,
**dadurch gekennzeichnet,** daß die Verschlußkappe (100) über ein Schraubgewinde (102) mit dem Gehäuseteil (22) verbunden ist.

15. Haltevorrichtung nach Anspruch 13,
**dadurch gekennzeichnet,** daß die Verschlußkappe (100) über ein aus Gewindesegmenten (114) bestehendes Schnellverschlußgewinde (116) mit dem Gehäuseteil (22) verbunden ist.

16. Haltevorrichtung nach Anspruch 13,
**dadurch gekennzeichnet,** daß die Verschlußkappe (100) über einen Bajonettverschluß mit dem Gehäuseteil (22) verbunden ist.

17. Haltevorrichtung nach einem oder mehreren der Ansprüche 13 bis 16,
**dadurch gekennzeichnet,** daß die Verschlußkappe (100) in ihrer montierten Stellung gegen Lösen gesichert ist.

18. Haltevorrichtung nach einem oder mehreren der Ansprüche 13 bis 17,
**dadurch gekennzeichnet,** daß die Verschlußkappe (100) im Bereich ihrer Umfangswandung mindestens eine, vorzugsweise zwei einander diametral gegenüberliegende, durch axiale Freisparungen (118) gebildete Rastzungen (120) aufweist, die jeweils mit einem Hakenende (122) einen äußeren Ringsteg (125) des Gehäuseteils (22) rastend hintergreifen.

19. Haltevorrichtung nach Anspruch 18,
**dadurch gekennzeichnet,** daß im freien Endbereich jeder Rastzunge (120) ein Hebel (126) befestigt ist, der sich axial über die Rastzunge (120) hinaus erstreckt und in seinem etwa mittigen Bereich auf einem am Beginn der Rastzunge (120) angeordneten, radialen Ansatz (128) der Verschlußkappe (100) aufliegt.

20. Haltevorrichtung nach einem oder mehreren der Ansprüche 13 bis 19,
**dadurch gekennzeichnet,** daß die Verschlußkappe (100) auf ihrer der Basisplatte (18) zugekehrten Öffnungsseite einen sich radial nach außen erstreckenden Andruck-Ringsteg (104) aufweist, der vorzugsweise eine in Richtung der Basisplatte (18) offene Ringnut (106) und einen in dieser angeordneten, elastischen Ring (108) besitzt.

21. Haltevorrichtung nach einem oder mehreren der Ansprüche 1 bis 11,
**dadurch gekennzeichnet,** daß das Arretierteil (46) derart um die Längsachse (20) drehbar an dem Sockelteil (14) gehaltert ist, daß es aus einer Vormontagestellung in eine Arretierstellung verdrehbar ist, wobei in der Vormontagestellung das Sockelteil (14) zusammen mit dem Arretierteil (46) in die Montageöffnung einsetzbar ist und in der Arretierstellung das Arretierteil (46) an der Unterseite des Montageöffnungsrandes unter Vorspannung anliegt.

22. Haltevorrichtung nach Anspruch 21,
**dadurch gekennzeichnet,** daß das Arretierteil (46) über eine schnappbare Formschlußverbindung (150) an dem Sockelteil (14) gehaltert ist.

23. Haltevorrichtung nach Anspruch 21 oder 22,
**dadurch gekennzeichnet,** daß das Arretierteil (46) in der Arretierstellung zusätzlich über ein die Vorspannung erzeugendes Schnellverschlußgewinde (168) mit dem Sockelteil (14) verbunden ist.

24. Haltevorrichtung nach Anspruch 22 oder 23,
**dadurch gekennzeichnet,** daß das Arretierteil (46) mehrere, insbesondere zwei einander diametral gegenüberliegende, axial angeordnete und in radialer Richtung federelastische Andruckschenkel (156) aufweist, wobei die schnappbare Formschlußverbindung (150) einerseits von einer der Kühlerfigur (1) zugekehrten Ringstufe (158) des Sockelteils (14) sowie andererseits von radial nach innen weisenden und die Ringstufe (158) rastend und formschlüssig hintergreifenden Raststegen (160) der Andruckschenkel (156) gebildet ist.

25. Haltevorrichtung nach Anspruch 24,
**dadurch gekennzeichnet,** daß die Ringstufe (158) in der der Kühlerfigur (1) abgekehrten Richtung über eine Auflaufschrägfläche (163) in die Umfangsfläche des Sockelteils (14) übergeht.

26. Haltevorrichtung nach Anspruch 24 oder 25,
**dadurch gekennzeichnet,** daß die Andruckschenkel (156) des Arretierteils (46) einstückig von einem senkrecht zur Längsachse (20) liegend auf der der Kühlerfigur (1) abgekehrten Seite des Sockelteils (14) angeordneten Boden (154) ausgehen, wobei der Boden (154) vorzugsweise mit einer zentrischen Öffnung (164) auf dem sich in axialer, der Kühlerfigur (1) abgekehrter Richtung aus dem Sockelteil (14) erstreckenden Ringteil (82) des in dem Sockelteil (14) gelagerten Druckrings (74) mit geringem Umfangspiel geführt ist.

27. Haltevorrichtung nach einem oder mehreren der Ansprüche 23 bis 26,
**dadurch gekennzeichnet,** daß das Schnellverschlußgewinde (168) einerseits von einzelnen, in Umfangsrichtung voneinander beabstandeten, stegartigen Gewindesegmenten (170) des Sockelteils (14) sowie andererseits von den Raststegen (160) der Andruckschenkel (156) des Arretierteils (46) gebildet ist.

28. Haltevorrichtung nach Anspruch 27,
**dadurch gekennzeichnet,** daß jedes Gewindesegment (170) des Sockelteils (14) eine der Kühlerfigur (1) axial zugekehrte Schrägfläche (172) aufweist, die ausgehend von der Ringstufe (158) in einem Steigungswinkel (α) von vorzugsweise 5° in Umfangsrichtung und schräg in Richtung der Kühlerfigur (1) verläuft, wobei die mit den Gewindesegmenten (170) zusammenwirkenden Raststege (160) des Arretierteils (46) vorzugsweise ebenfalls in dem Steigungswinkel (α) schräg zu einer zur Längsachse (20) senkrechten Ebene angeordnet sind.

29. Haltevorrichtung nach einem oder mehreren der Ansprüche 23 bis 28,
**dadurch gekennzeichnet,** daß das Schnellverschlußgewinde (168) mit einer zusätzlichen Rastverbindung ausgestattet ist, durch die das Arretierteil (46) in der Arretierstellung gegen ungewolltes Lösen gesichert ist.

30. Haltevorrichtung nach Anspruch 29,
**dadurch gekennzeichnet,** daß das Sockelteil (14) auf seinem Außenumfang im Bereich jedes der Gewindesegmente (170) eine sekantenartige Schrägfläche (180) aufweist, die eine radiale Rastvertiefung (182) für den jeweiligen Raststeg (160) des Arretierteils (46) bildet.

31. Haltevorrichtung nach Anspruch 30,
**dadurch gekennzeichnet,** daß die die Rastvertiefungen (182) bildenden Schrägflächen (180) einen Hinterschneidungswinkel (β) von insbesondere ca. 5° aufweisen, wobei die Raststege (160) des Arretierteils (46) in Anpassung an diesen Hinterschneidungswinkel (β) derart schräg verlaufende Auflagekanten (184) besitzen, daß in der Arretierstellung die Raststege (160) mit den Auflagekanten (184) rastend in die Rastvertiefungen (182) eingreifen und die Auflagekanten (184) im wesentlichen vollflächig auf den Schrägflächen (180) aufliegen.

32. Haltevorrichtung nach einem oder mehreren der Ansprüche 21 bis 31,
**dadurch gekennzeichnet,** daß das Arretierteil (46) einstückig insbesondere an den Boden (154) angeformte Grifflaschen (176) aufweist.

33. Haltevorrichtung nach einem oder mehreren der Ansprüche 21 bis 32,
**dadurch gekennzeichnet,** daß das Arretierteil (46) aus einem einstückigen Federstahlblech besteht.

34. Haltevorrichtung nach einem oder mehreren der Ansprüche 21 bis 33,
**dadurch gekennzeichnet,** daß das Arretierteil (46) zumindest bereichsweise, vorzugsweise aber vollflächig eine Oberflächenbeschichtung aus einem gute Gleiteigenschaften aufweisenden Material, insbesondere Zink-Aluminium mit Teflon-Anteilen, aufweist.

35. Haltevorrichtung nach einem oder mehreren der Ansprüche 21 bis 34,
**dadurch gekennzeichnet,** daß das Arretierteil (46) sowohl in der Lösestellung als auch in der Arretierstellung an die Drehungen begrenzenden Anschlagstegen (186/174) des Sockelteils (14) anliegt.

36. Haltevorrichtung nach einem oder mehreren der Ansprüche 1 bis 35,
**gekennzeichnet durch** eine zwischen dem Auflagesteg (24) der Basisplatte (18) und dem Montageöffnungsrand angeordnete, elastische Zwischenlage (136), die vorzugsweise den Montageöffnungsrand zumindest bereichsweise umgreift.

## Claims

1. Holding device (2) with a radiator emblem (1) for installation in an installation opening of a sheet metal part of the bodywork (16), consisting of a socket part (14) which retains the radiator emblem (1) particularly by way of a pivot bearing and resiliently by way of an emblem-holding spring (44) and which can be inserted in the direction of its longitudinal axis (20) into the installation opening, this socket part having a peripheral supporting flange (24) for supporting it on the upper face of the rim of the installation opening, and also consisting of a locking part (46) which is connected to the socket part (14) and which in the installed state rests on the lower face of the rim of the installation opening in order to hold the socket part (14) in the installation opening under pretension, wherein the locking part (46) is connected directly, independently of the emblem-holding spring (44) to the socket part (14) and wherein the emblem-holding spring (44) is constructed as a helical compression spring, the upper end (56) of which facing the supporting flange (24) is supported on the socket part (14), whilst the opposite, lower end (58) is connected to the foot (8) of the emblem, characterised in that the lower end (58) of the emblem-holding spring (44) is connected to the foot (8) of the emblem by way of an integrally adjoining spring wire portion (60) which is bent around and extends axially upwards through the holding spring (44).

2. Holding device according to Claim 1, characterised in that the socket part (14) has a base plate (18) which forms the supporting flange (24) and has a central axial bearing opening (26), also a bearing (30) disposed below the base plate (18) and movable downwards away therefrom against spring force and having a bearing recess (32) open in the direction of the bearing opening (26) and shaped like a joint cup and an axial passage (36) disposed in the base of the bearing recess (32), and further having a bearing ball (38) articulated in the bearing recess (32) of the bearing (30) and connected to a foot (8) of the radiator emblem (1), wherein the bearing ball (38) and the foot (8) of the emblem are preferably constructed in two pieces and the bearing ball (38) has an axial passage (40) and a receiving recess (42) which is formed in the upper end region of the passage (40) and in which the foot (8) of the radiator emblem (1) rests, wherein the emblem-holding spring (44) constructed as an axially disposed helical spring is connected at one end by the passage (36) of the bearing (30) and preferably by the passage (40) of the bearing ball (38) to the foot (8) of the emblem and at the other end is supported on the socket part (14) and is under pretension holding the bearing ball (38) in the bearing (30) and preferably the foot (8) of the emblem in the receiving recess (42) of the bearing ball (38).

3. Holding device according to Claim 2, characterised in that the upper end (56) of the emblem-holding spring (44) is supported indirectly on the socket part (14) by way of the bearing (30).

4. Holding device according to Claim 3, characterised in that the bearing (30) has an annular flange (64) which surrounds its passage (36) and extends axially downwards away from the bearing ball (38), the emblem-holding spring (44) resting on the bearing (30) with its upper end (56) surrounding this annular flange (64).

5. Holding device according to one or more of Claims 2 to 4, characterised in that the bearing (30) is freely movable downwards in the axial direction against spring force and is guided in the socket part (14) so as to be fixed against twisting about the longitudinal axis (20).

6. Holding device according to one or more of Claims 1 to 5, characterised in that the socket part (14) has an axial hollow cylindrical housing part (22) which is preferably integrally connected to the base plate (18).

7. Holding device according to Claim 6, characterised in that the housing part (22) has on its inner peripheral surface (66) at least one, preferably two axially extending guide grooves (68) which lie diametrically opposite one another and in which the bearing (30) engages in each case with a guide flange (70) which extends radially outwards.

8. Holding device according to one or more of Claims 2 to 7, characterised in that a helical compression spring (34) which surrounds the emblem-holding spring (44) coaxially with a clearance is disposed under pre-tension between an annular flange (72) of the bearing (30) extending radially outwards and a thrust ring (74) held in the housing part (22).

9. Holding device according to Claim 8, characterised in that the thrust ring (74) has a ring part (76) in the shape of an annular disc which extends radially outwards and is supported on a Seeger ring (80) sitting in an inner annular groove (74) in the housing part (22), and also has a hollow cylindrical ring part (82) which extends axially and surrounds the holding spring (44) coaxially.

10. Holding device according to Claim 9, characterised in that the hollow cylindrical ring part (82) extends in the direction of the bearing (30) and coaxially between the helical compression spring (34) and the emblem-holding spring (44), wherein preferably the axial ring part (82) has a wall thickness which is approximately equal to the radial distance between the helical compression spring (34) and the emblem-holding spring (44).

11. Holding device according to one or more of Claims 6 to 10, characterised in that the housing part (22) has in its end region remote from the base plate (18) at least one, preferably two axial access holes (84) lying diametrally opposite one another.

12. Holding device according to one or more of Claims 1 to 11, characterised in that the locking part (46) is constructed as a spring clip (86) retained pivotably on the socket part (14).

13. Holding device according to one or more of Claims 1 to 11, characterised in that the locking part (46) is constructed as a closure cap (100) which is placed releasably from below onto the housing part (22) of the socket part (14).

14. Holding device according to Claim 13, characterised in that the closure cap (100) is connected to the housing part (22) by a screw thread (102).

15. Holding device according to Claim 13, characterised in that the closure cap (100) is connected to the housing part (22) by a quick-closure thread (116) consisting of thread segments (114).

16. Holding device according to Claim 13, characterised in that the closure cap (100) is connected to the housing part (22) by a bayonet closure.

17. Holding device according to one or more of Claims 13 to 16, characterised in that the closure cap (100) is secured in its installed position against loosening.

18. Holding device according to one or more of Claims 13 to 17, characterised in that the closure cap (100) has in the region of its peripheral wall at least one, preferably two stop tongues (120) which lie diametrically opposite one another and are formed by axial cut-outs (118) and which in each case engage with a hooked end (122) as a stop behind an outer annular flange (125) of the housing part (22).

19. Holding device according to Claim 18, characterised in that in the free end region of each stop tongue (120) a lever (126) is fixed which extends axially beyond the stop tongue (120) and in its approximately central region rests on a radial projection (128) of the closure cap (100) disposed at the beginning of the stop tongue (120).

20. Holding device according to one or more of Claims 13 to 19, characterised in that the closure cap (100) has on its open side facing the base plate (18) an annular pressing flange (104) which extends radially outwards and preferably has an annular groove (106) which is open in the direction of the base plate (18) and a resilient ring (108) disposed therein.

21. Holding device according to one or more of Claims 1 to 11, characterised in that the locking part (46) is retained on the socket part (14) so as to be rotatable about the longitudinal axis (20) in such a way that it can be rotated out of a pre-installation position into a locking position, wherein in the pre-installation position the socket part (14) can be inserted together with the locking part (46) into the installation opening and in the locking position the locking part (46) rests under pretension on the underside of the rim of the installation opening.

22. Holding device according to Claim 21, characterised in that the locking part (46) is retained on the socket part (14) by a snap-on form-locking connection (150).

23. Holding device according to Claim 21 or 22, characterised in that in the locking position the locking part (46) is additionally connected to the socket part (14) by a quick-closure thread (168) which produces the pretension.

24. Holding device according to Claim 22 or 23, characterised in that the locking part (46) has several, preferably two diametrically opposite axially disposed pressing arms (156) which are resilient in the radial direction, wherein the snap-on form-locking connection (150) is formed on the one hand by an annular step (158) of the socket part (14) facing the radiator emblem (1) and on the other hand by stop flanges (160) of the pressing arms (156) which are directed radially inwards and engage in a form-locking manner as stops behind the annular step (158).

25. Holding device according to Claim 24, characterised in that the annular step (158) merges by way of an inclined run-on surface (163) into the peripheral surface of the socket part (14) in the direction away from the radiator emblem (1).

26. Holding device according to Claim 24 or 25, characterised in that the pressing arms (156) of the locking part (46) extend integrally from a base (154) which lies perpendicular to the longitudinal axis (20) and is disposed on the side of the socket part (14) remote from the radiator emblem (1), wherein the base (154) is preferably guided with a central opening (164) with a slight peripheral clearance on the ring part (82) extending out of the socket part (14) of the thrust ring (74) mounted in the socket part (14) in the axial direction facing away from the radiator emblem (1).

27. Holding device according to one or more of Claims 23 to 26, characterised in that the quick-closure thread (168) is formed on the one hand by individual flange-like thread segments (170) of the socket part (14) spaced from one another in the peripheral direction and on the other hand by the stop flanges (160) of the pressing arms (156) of the locking part (46).

28. Holding device according to Claim 27, characterised in that each thread segment (170) of the socket part (14) has an inclined surface (172) axially facing the radiator emblem (1) and extending away from the annular flange (158) at an angle of inclination (α) of preferably 5° in the peripheral direction and inclined in the direction of the radiator emblem (1), wherein the stop flanges (160) of the locking part (46) co-operating with the thread segments (170) are preferably likewise disposed at the angle of inclination (α) to a plane perpendicular to the longitudinal axis (20).

29. Holding device according to one or more of Claims 23 to 28, characterised in that the quick-closure thread (168) is equipped with an additional stop connection by means of which the locking part (46) is secured in the locking position against inadvertent loosening.

30. Holding device according to Claim 29, characterised in that the socket part (14) has on its outer periphery in the region of each of the thread segments (170) a secant-like inclined surface (180) which forms a radial stop recess (182) for the respective stop flange (160) of the locking part (46).

31. Holding device according to Claim 30, characterised in that the inclined surfaces (180) forming the stop recesses (182) have a back taper angle (β) of in particular approximately 5°, the stop flanges (160) of the locking part (46) having bearing edges (184) inclined in adaptation to this back taper angle (β) in such a way that in the locking position the stop flanges (160) engage in the stop recesses (182) with the bearing edges (184) as stops and the bearing edges (184) bear on the inclined surfaces (180) with substantially the whole surface.

32. Holding device according to one or more of Claims 21 to 31, characterised in that the locking part (46) has gripping clips (176) integrally formed particularly on the base (154).

33. Holding device according to one or more of Claims 21 to 32, characterised in that the locking part (46) consists of an integral spring steel plate.

34. Holding device according to one or more of Claims 21 to 33, characterised in that the locking part (46) has at least in some zones but preferably over the whole surface a surface coating of a material having good sliding properties, particularly zinc-aluminium with Teflon components.

35. Holding device according to one or more of Claims 21 to 34, characterised in that the locking part (46) rests on stop elements (186/174) of the socket part (14) which limit the turns both in the release position and in the locking position.

36. Holding device according to one or more of Claims 1 to 35, characterised by a resilient intermediate layer (136) which is disposed between the supporting flange (24) of the base plate (18) and the rim of the installation opening and which preferably engages at least in some zones around the rim of the installation opening.

## Revendications

1. Dispositif de maintien (2) avec un enjoliveur de capot (1), destiné à être monté dans l'ouverture d'une pièce en tôle (16), ce dispositif comprenant un socle (14) maintenant l'enjoliveur (1), en particulier au moyen d'un montage pivotant et élastique, au moyen d'un ressort de maintien (44), ce socle pouvant être monté dans la direction de son axe longitudinal (20) dans l'ouverture d'assemblage, ledit socle étant muni d'une collerette d'appui circonférientielle (24) pouvant être appliquée sur la face supérieure du bord de l'ouverture d'assemblage, le dispositif comprenant en outre un élément de blocage (46) relié au socle (14) qui, dans l'état assemblé, s'appuie sous précontrainte sur la face inférieure du bord de l'ouverture d'assemblage en vue de maintenir le socle (14), l'élément de blocage (46) étant relié directement au socle (14) indépendamment du ressort (44) de maintien de l'enjoliveur et le ressort (44) de maintien de l'enjoliveur ayant la forme d'un ressort hélicoïdal de pression, dont l'extrémité supérieure (56), en regard de la collerette d'appui (24) s'appuie sur le socle (14) et dont l'extrémité inférieure opposée (58) est reliée au pied (8) de l'enjoliveur, caractérisé en ce que l'extrémité inférieure (58) du ressort (44) de maintien de l'enjoliveur est reliée au pied (8) de l'enjoliveur par une portion de fil d'acier plié (60) prolongeant sans transition le ressort (44) et s'étendant axialement à travers celui-ci vers le haut.

2. Dispositif de maintien selon la revendication 1,
caractérisé par le fait que le socle (14) comprend d'une part une plaque de base (18) formant la collerette d'appui (24) et munie d'une ouverture centrale axiale (26), d'autre part, un palier (30) disposé en dessous de la plaque de base (18) et pouvant être écarté de celle-ci vers le bas à l'encontre d'un ressort, ce palier présentant un creux (32) en forme de cavité articulaire, ouvert dans la direction de l'ouverture (26) et une ouverture de passage axial (36) disposée dans le fond du creux (32), et en outre, une boule-coussinet (38), articulée dans le creux (32) du palier (30) et reliée à un pied (8) de l'enjoliveur (1), la boule (38) et le pied (8) de l'enjoliveur étant de préférence réalisés en deux pièces distinctes, et la boule (38) comportant une ouverture traversante axiale (40) et une cavité d'accueil (42) formée dans la région terminale supérieure de l'ouverture de passage (40), dans laquelle repose le pied (8) de l'enjoliveur (1), une extrémité du ressort (44) de maintien de l'enjoliveur, qui a la forme d'un ressort hélicoïdal disposé axialement, étant reliée, à travers l'ouverture de passage (36) du palier (30), ainsi que, de préférence, à travers l'ouverture de passage (40) de la boule (38), au pied (8) de l'enjoliveur, son autre extrémité s'appuyant sur le socle (14), maintenant sous précontrainte la boule (38) dans le palier (30) et de préférence le pied (8) de l'enjoliveur dans la cavité (42) de la boule (38).

3. Dispositif de maintien selon la revendication 2,
caractérisé par le fait que l'extrémité supérieure (56) du ressort de maintien (44) s'appuie indirectement sur le socle (14) au moyen du palier (30).

4. Dispositif de maintien selon la revendication 3,
caractérisé par le fait que le palier (30) comporte une barrette annulaire (64) entourant son ouverture de passage (36) et s'étendant axialement vers le bas depuis la boule (38), l'extrémité supérieure (56) du ressort de maintien (44) entourant cette barrette annulaire (64) et reposant sur le palier (30).

5. Dispositif de maintien selon l'une ou plusieurs des revendications 2 à 4,
caractérisé par le fait que le palier (30) peut être déplacé librement vers le bas dans la direction axiale, à l'encontre d'un ressort, et est guidé dans le socle (14) à l'abri d'une torsion autour de l'axe longitudinal (20).

6. Dispositif de maintien selon l'une ou plusieurs des revendications 1 à 5,
caractérisé par le fait que le socle (14) comporte un élément de boîtier (22) ayant la forme d'un cylindre creux et venu de préférence d'une pièce avec la plaque de base (18).

7. Dispositif de maintien selon la revendication 6,
caractérisé par le fait que l'élément de boîtier (22) présente sur sa face circonférientielle interne (66) au moins une, de préférence deux rainures de guidage axiales (68), diamétralement opposées, dans lesquelles s'insère respectivement une nervure de guidage (70) du palier (30) faisant radialement saillie vers l'extérieur.

8. Dispositif de maintien selon l'une ou plusieurs des revendications 2 à 7,
caractérisé par le fait qu'entre une nervure annulaire (72) du palier (30) s'étendant radialement vers l'extérieur et une bague de pression (74) maintenue dans l'élément de boîtier (22) est disposé un ressort hélicoïdal de pression (34) entourant coaxialement à une certaine distance le ressort (44) de maintien de l'enjoliveur.

9. Dispositif de maintien selon la revendication 8,
caractérisé par le fait que la bague de pression (74) comporte un élément annulaire (76) sous forme de disque, s'étendant radialement vers l'extérieur, s'appuyant sur un anneau de retenue (type Seeger) (80) disposé dans la rainure annulaire intérieure (74) de l'élément de boîtier (22), ainsi qu'un élément annulaire (82) ayant la forme d'un cylindre creux, s'étendant axialement et entourant coaxialement le ressort de maintien (44).

10. Dispositif de maintien selon la revendication 9,
caractérisé par le fait que l'élément annulaire en forme de cylindre creux (82) s'étend dans la direction du palier (30) et coaxialement entre le ressort de pression hélicoïdal (34) et le ressort (44) de maintien de l'enjoliveur, l'épaisseur de la paroi de l'élément annulaire axial (82) étant de préférence telle qu'elle corresponde à la distance radiale entre le ressort hélicoïdal de pression (34) et le ressort (44).

11. Dispositif de maintien selon l'une ou plusieurs des revendications 6 à 10,
caractérisé par le fait que l'élément de boîtier (22) possède, dans sa région terminale à l'opposé de la plaque de base (18), au moins une, de préférence deux cavités d'accès axiales (84), diamétralement opposées.

12. Dispositif de maintien selon l'une ou plusieurs des revendications 1 à 11,
caractérisé par le fait que l'élément de blocage (46) est un étrier élastique (86) fixé de manière pivotante sur le socle (14).

13. Dispositif de maintien selon l'une ou plusieurs des revendications 1 à 11,
caractérisé par le fait que l'élément de blocage (46) a la forme d'un capot de fermeture (100) posé sur l'élément de boîtier (22) du socle (14) et amovible depuis le bas.

14. Dispositif de maintien selon la revendication 13,
caractérisé par le fait que le capot de fermeture (100) est relié à l'élément de boîtier (22) au moyen d'un filetage (102).

15. Dispositif de maintien selon la revendication 13,
caractérisé par le fait que le capot de fermeture (100) est relié à l'élément de boîtier (22) au moyen d'un filet d'emboîtement rapide (116) comportant des segments de filet (114).

16. Dispositif de maintien selon la revendication 13,
caractérisé par le fait que le capot de fermeture (100) est relié à l'élément de boitier (22) au moyen d'un emboîtement à baïonette.

17. Dispositif de maintien selon l'une ou plusieurs des revendications 13 à 16,
caractérisé par le fait que le capot de fermeture (100) monté ne peut pas être détaché involontairement.

18. Dispositif de maintien selon l'une ou plusieurs des revendications 13 à 17,
caractérisé par le fait que le capot de fermeture (100) possède dans la région de sa paroi circonférentielle au moins une, de préférence deux languettes d'arrêt (120) diamétralement opposées et formées par des évidements axiaux (118), une extrémité crochue (122) de ces languettes se bloquant respectivement derrière une nervure annulaire extérieure (125) de l'élément de boîtier (22).

19. Dispositif de maintien selon la revendication 18,
caractérisé par le fait que, dans la région terminale libre de chaque languette (120) est fixé un levier (126) qui s'étend axialement au-delà de la languette d'arrêt (120) et dont la région sensiblement centrale repose sur un prolongement radial (128) du capot de fermeture (100) disposé au début de la languette d'arrêt (120).

20. Dispositif de maintien selon l'une ou plusieurs des revendications 13 à 19,
caractérisé par le fait que le capot de fermeture (100) présente, sur son côté d'ouverture en regard de la plaque de base (18), une nervure annulaire d'appui (104) s'étendant radialement vers l'extérieur, munie de préférence d'une rainure annulaire (106) ouverte dans la direction de la plaque de base (18), ainsi que d'une bague élastique (108) disposée dans cette rainure.

21. Dispositif de maintien selon l'une ou plusieurs des revendications 1 à 11,
caractérisé par le fait que l'élément de blocage (46) est maintenu sur le socle (14) de manière à pouvoir pivoter autour de l'axe longitudinal (20) en vue de pouvoir passer d'une position de pré-assemblage vers une position de blocage, le socle (14) pouvant être monté, lors du pré-assemblage, ensemble avec l'élément de blocage (46), dans l'ouverture d'assemblage et l'élément de blocage (46) étant appliqué sous précontrainte dans la position bloquée, sur la face inférieure du bord de l'ouverture d'assemblage.

22. Dispositif de maintien selon la revendication 21,
caractérisé par le fait que l'élément de blocage (46) est maintenu sur le socle (14) par un moyen d'encliquetage mécanique (150).

23. Dispositif de maintien selon la revendication 21 ou 22,
caractérisé par le fait que, dans la position bloquée, l'élément de blocage (46) est en outre relié au socle (14) par un filet d'emboîtement rapide (168) engendrant une précontrainte.

24. Dispositif de maintien selon la revendication 22 ou 23,
caractérisé par le fait que l'élément de blocage (46) présente plusieurs bras d'appui (156), en particulier deux bras diamétralement opposés, disposés axialement et élastiques dans la direction radiale, la liaison par encliquetage (150) étant constituée d'une part par un redan annulaire (158) du socle (14) disposé en regard de l'enjoliveur (1) et d'autre part, par des nervures d'arrêt (160) du bras d'appui (156) dirigées radialement vers l'intérieur et qui se bloquent mécaniquement derrière le redan annulaire (158).

25. Dispositif de maintien selon la revendication 24,
caractérisé par le fait que le redan annulaire (158) est suivi, dans la direction opposée à l'enjoliveur (1) par une face oblique ascendante (163), suivie par la face circonférentielle du socle (14).

26. Dispositif de maintien selon la revendication 24 ou 25,
caractérisé par le fait que les bras d'appui (156) de l'élément de blocage (46) sont venus d'une pièce avec et partent d'un fond (154) disposé perpendiculairement par rapport à l'axe longitudinal (20) sur le côté opposé à l'enjoliveur (1) du socle (14), ce fond (154), muni de préférence d'une ouverture centrale (164), étant guidé avec un faible jeu circonférentiel, sur l'élément annulaire (82) de la bague de pression (74) placée dans le socle (14) et l'élément (82) faisant saillie du socle dans la direction axialement opposée à l'enjoliveur (1).

27. Dispositif de maintien selon l'une ou plusieurs des revendications 23 à 26,
caractérisé par le fait que le filet d'emboîtement rapide (168) est constitué d'une part par des segments (170) en forme de nervures du socle (14), espacés entre eux dans la direction circonférentielle et d'autre part par les nervures d'arrêt (160) des bras d'appui (156) de l'élément de blocage (46).

28. Dispositif de maintien selon la revendication 27,
caractérisé par le fait que chaque segment de filet (170) du socle (14) possède une surface oblique (172) disposée axialement en regard de l'enjoliveur (1), cette surface s'étendant en partant du redan annulaire (158), avec un angle ascendant (α) de 5° de préférence dans la direction circonférentielle et obliquement dans la direction de l'enjoliveur (1), les nervures d'arrêt (160) de l'élément de blocage (46) qui coopèrent avec les segments de filet (170) étant de préférence également disposées avec un angle ascendant (α) obliquement par rapport à un plan qui est perpendiculaire à l'axe longitudinal (20).

29. Dispositif de maintien selon l'une ou plusieurs des revendications 23 à 28,
caractérisé par le fait que le filet d'emboîtement rapide (168) comprend une liaison de blocage supplémentaire, empêchant un détachement involontaire de l'élément de blocage (46) lorsqu'il se trouve dans la position bloquée.

30. Dispositif de maintien selon la revendication 29,
caractérisé par le fait que le socle (14) possède sur sa circonférence extérieure, dans la région de chacun de ses segments de filet (170), une face oblique (180) ressemblant à une secante, cette surface formant un creux d'arrêt axial (182) pour la nervure correspondante (160) de l'élément de blocage (46).

31. Dispositif de maintien selon la revendication 30,
caractérisé par le fait que les faces obliques (180) formant les creux d'arrêt (182) ont un angle de contre-dépouille (β) de 5° environ, les nervures d'arrêt (160) de l'élément de blocage (46) ayant, pour s'adapter à cet angle de contre-dépouille (β), des bords d'application (184) obliques tels que, dans la position bloquée, les bords d'application (184) des nervures d'arrêt (160) s'insèrent et se bloquent dans les creux d'arrêt (182) et que les bords (184) soient appliqués sensiblement sur toute leur surface sur les faces obliques (180).

32. Dispositif de maintien selon l'une ou plusieurs des revendications 21 à 31,
caractérisé par le fait que l'élément de blocage (46) présente des pattes de saisie (176) venues de moulage en particulier avec le fond (154).

33. Dispositif de maintien selon l'une ou plusieurs des revendications 21 à 32,
caractérisé par le fait que l'élément de blocage (46) est une pièce unique en acier à ressort.

34. Dispositif de maintien selon l'une ou plusieurs des revendications 21 à 33,
caractérisé par le fait que l'élément de blocage (46) possède au moins par endroits, mais de préférence sur toute sa surface, un revêtement de surface en une matière ayant de bonnes propriétés de glissement, en particulier en (un alliage de) zinc/aluminium avec une adjonction de Téflon.

35. Dispositif de maintien selon l'une ou plusieurs des revendications 21 à 34,
caractérisé par le fait que l'élément de blocage (46) est appliqué, aussi bien dans la position détachée que dans la position bloquée, contre des nervures de butée (186/174) du socle (14) qui limitent les rotations.

36. Dispositif de maintien selon l'une ou plusieurs des revendications 1 à 35,
caractérisé par une couche intermédiaire élastique (136), disposée entre la nervure d'application (24) de la plaque de base (18) et le bord de l'ouverture d'assemblage, cette couche entourant au moins en partie ledit bord.
